# EUROPÄISCHE PATENTSCHRIFT

(11) **EP 3 815 012 B1**
(45) Veröffentlichungstag und Bekanntmachung des Hinweises auf die Patenterteilung: **13.08.2025**
(21) Anmeldenummer: 19732394.2
(22) Anmeldetag: 26.06.2019
(51) Int. Cl.: G06Q 10/08

(54) **MOBILE VORRICHTUNG ZUM INVENTARISIEREN VON LAGERBESTÄNDEN**
MOBILE DEVICE FOR INVENTORYING WAREHOUSE STOCKS
DISPOSITIF MOBILE POUR INVENTORIER DES STOCKS

(30) Priorität: 26.06.2018 EP 18179921
(43) Veröffentlichungstag der Anmeldung: 05.05.2021
(73) Patentinhaber: doks.service GmbH, 22587 Hamburg (DE)
(72) Erfinder: FEDERMANN, Benjamin, 34130 Kassel (DE); FIEDLER, Martin, 44139 Dortmund (DE); BECKER, Mike, 34246 Vellmar (DE); LANG, Martin, 36325 Feldatal (DE)
(74) Vertreter: Zimmermann & Partner Patentanwälte mbB
(86) Internationale Anmeldenummer: PCT/EP2019/067050
(87) Internationale Veröffentlichungsnummer: WO 2020/002455

(56) Entgegenhaltungen:
- EP-A1- 3 220 227
- WO-A1-2018/035482

## Beschreibung

### Technisches Gebiet

Eine der Hauptaufgaben der Logistik ist es, Güter von A nach B zu bewegen, beispielsweise vom Produzenten über einen Händler zum Endkunden. Über verschiedene Zwischenstationen wie Produktionslager oder in späteren Schritten Distributionszentren müssen die Güter umgeschlagen und für den Endkunden passend kommissioniert und verpackt werden. In all diesen Bewegungen über die Supply Chain ist es wichtig, die Bewegung der Güter zu verfolgen, um kontinuierlich einen Bestandsüberblick zu haben.

Auch innerhalb eines Lagers müssen alle Bewegungen rückverfolgt werden. So sind tägliche Ein-/Auslagerungen genau zu verfolgen. Ziel ist es zum Beispiel, den Buchbestand im sogenannten Warenwirtschaftssystem oder Enterprise Resource Planning zur realen IST Situation im Lager kontinuierlich entsprechend zu führen. Tägliche Inventur kann daher für die meisten Logistikbetriebe unabdingbar sein. Der Betrieb, und insbesondere eine Inventarisierung von Lagern ist mit konventioneller Technik und konventionellen Methoden sehr aufwendig, insbesondere Kosten und arbeitsintensiv.

In der WO 2018/035482 A1 wird daher eine autonome Drohne für die Erfassung von Lagerbeständen beschrieben, die sich entlang von Regalen eines Warenlagers bewegt und mit ihrer Kamera die in den Regalen verstauten Pakete erfasst und auf den Paketen befindliche Etiketten erkennt.

EP 3 220 227 B1 beschreibt ein Inspektionssystem mit einem Bodenfahrzeug und einer Drohne, die selbstständig dem Bodenfahrzeug folgt. Dazu umfasst die Drohne eine Kamera, welche ein auf dem Bodenfahrzeug angebrachtes Erkennungsmuster erkennt. Die Drohne und das Bodenfahrzeug können miteinander kommunizieren.

### Zusammenfassung der Erfindung

Es wird daher eine, insbesondere mobile, Vorrichtung zum Inventarisieren von Lagerbeständen angestrebt, die zumindest einige der vorgenannten Probleme löst oder lindert. Diese Aufgabe wird durch die Vorrichtung gemäß Anspruch 1 und das Verfahren zum Inventarisieren von Lagerbeständen gemäß Anspruch 11 gelöst.

Gemäß einer Ausführungsform weist eine Vorrichtung zum Inventarisieren von Lagerbeständen eine mobile Flugvorrichtung und ein Bodenfahrzeug auf. Die mobile Flugvorrichtung umfasst eine optische Signaleinrichtung zur Abgabe von Positionssignalen, eine erste Bilderfassungseinrichtung zur bildlichen Erfassung von Lagergut und/oder von Lagereinrichtungen, und eine erste Sende- und Empfangsvorrichtung. Das Bodenfahrzeug umfasst eine Steuereinheit, ein mit der Steuereinheit gekoppeltes Umgebungssensorsystem zur Erfassung der Umgebung, eine mit der Steuereinheit gekoppelte zweite Sende- und Empfangsvorrichtung zur Kommunikation mit der ersten Sende- und Empfangsvorrichtung der mobilen Flugvorrichtung, und ein mit der Steuereinheit gekoppeltes Bilderfassungssystem zur Erfassung der Positionssignale der mobilen Flugvorrichtung.

Auch wenn nachfolgend die Erfindung mit Bezug zu einem Warenlager beschrieben wird, ist die Erfindung nicht darauf beschränkt. Die Erfindung stellt grundsätzlich ein autonomes System zum Inventarisieren oder Überprüfen von Lagerbeständen jeglicher Art bereit, beispielsweise auch für Produktionsteile eines Herstellungs- oder Montageprozesses oder für Bibliotheken und andere Lager.

Die Vorrichtung zum Inventarisieren umfasst gemäß einer Ausführungsform zwei voneinander getrennte vollautonome bzw. halbautonome Fahrzeuge. Das Bodenfahrzeug kann als autonomes oder vollautonomes Fahrzeug betrachtet werden, welche sich selbstständig und ohne externe Steuerung durch beispielsweise ein Warenlager bewegen kann. Dem Bodenfahrzeug kann zwar grundsätzlich eine Fahrtroute oder ein Fahrbereich vorgegeben sein, jedoch bewegt es sich dann selbstständig entlang der vorgegebenen Fahrtroute oder innerhalb des vorgegebenen Fahrbereichs. Beispielsweise kann das Bodenfahrzeug systematisch entlang aller Lagereinrichtungen innerhalb des Warenlagers fahren und somit sämtliche Lagereinrichtungen abscannen. Es ist jedoch auch möglich, dass das Bodenfahrzeug beispielsweise nach Vorgaben gezielt selbständig einzelne Lagereinrichtungen ansteuert.

Gemäß einer Ausführungsform weist das Bodenfahrzeug mindestens zwei angetriebene Räder und mindestens zwei Lenkräder oder Lenkrollen auf. Die angetriebenen Räder können entweder einzeln angetrieben werden oder über eine gemeinsame Antriebsachse. Es ist auch möglich, dass alle Räder des Bodenfahrzeugs angetrieben werden, auch die Lenkräder oder Lenkrollen.

Zur Orientierung im Warenlager ist das Bodenfahrzeug mit einem Umgebungssensorsystem zur Erfassung seiner Umgebung ausgestattet. Mit diesem Umgebungssensorsystem erkennt das Bodenfahrzeug nicht nur seine Umgebung, sondern kann bevorzugt auch seine eigene Position innerhalb des Warenlagers bestimmen.

Gemäß einer Ausführungsform weist das Umgebungssensorsystem des Bodenfahrzeugs ein Laserscannersystem auf. Hierbei kann es sich beispielsweise um ein LIDAR (light detection and ranging) handeln, bei dem mittels einer räumlichen Laserabtastung eine optische Abstands- und gegebenenfalls Geschwindigkeitsmessung erfolgt. Die Abtastung kann mittels eines, mittels zwei oder mittels mehrerer Laserstrahlen erfolgen. Diese können auch jeweils eine unterschiedliche Wellenlänge haben, um sich nicht gegenseitig zu stören.

Die vom Umgebungssensorsystem gewonnenen Daten können beispielsweise für eine simultane Positionsbestimmung und Kartenerstellung (SLAM; Engl.: Simultaneous Localization and Mapping) verwendet werden. Dabei erstellt das Bodenfahrzeug eine Karte seiner Umgebung, oder gleicht diese mit einer vorgegebenen Karte ab. Gleichzeitig ist es möglich, die eigene Position innerhalb der erstellten oder vorgegebenen Karte zu erkennen. Typischerweise misst das Umgebungssensorsystem die relative Position zu Objekten, wie beispielsweise Lagereinrichtungen, oder speziell vorgesehenen Referenzpunkten im Warenlager. Daraus kann dann sowohl auf die eigene absolute Position als auch die absolute Position der Lagereinrichtungen geschlossen werden.

Gemäß einer Ausführungsform erfolgt wiederholt eine Erstellung einer Umgebungskarte durch das Bodenfahrzeug. Dadurch kann zum durch Vergleich mit bisherigen Karteninformationen das Bodenfahrzeug seine Position erkennen. Zum anderen können die bisherigen Karteninformationen, d. h. die aktuell gespeicherte Karte aktualisiert werden. Dies ist insbesondere dort von Nutzen, wo es zu Änderungen der Umgebung kommt, beispielsweise in einem Warenhaus, in dem temporär beispielsweise Paletten oder Pakete zwischengelagert in Gängen werden.

Das Umgebungssensorsystem des Bodenfahrzeugs kann weiterhin gemäß einer Ausführungsform mit einer sogenannten Rad-Odometrie ausgestattet sein. Über die Erfassung des Drehwinkels und/oder der Drehzahl, beispielsweise der angetriebenen Räder des Bodenfahrzeugs, kann die Position des Bodenfahrzeugs innerhalb des Warenlagers, beispielsweise relativ zu einem Bezugspunkt, von dem aus das Bodenfahrzeug gestartet ist, bestimmt werden. Lenkbewegungen des Bodenfahrzeugs könne dabei ebenfalls berücksichtigt werden.

Zur weiteren Verbesserung der Bestimmung der Position des Bodenfahrzeugs kann dieses zusätzliche Sensoren aufweisen, wie beispielsweise Ultraschallsensoren. Es ist weiterhin möglich, dass aus der Auswertung von definierten Referenzpunkten im Warenlager, die vom Laserscannersystem erfasst werden, Rückschlüsse auf die Position des Bodenfahrzeugs im Warenlager gezogen werden. Das Bodenfahrzeug kann auch gezielt bestimmte Referenzpunkte zur Eigenkalibrierung der eigenen Position anfahren.

Separat zum Bodenfahrzeug ist eine mobile Flugvorrichtung vorgesehen, bei welcher es sich beispielsweise um eine Drohne, insbesondere um einen Quadrokopter, handeln kann. Die Flugroute der mobilen Flugvorrichtung wird durch das Bodenfahrzeug gesteuert. Daher kann die mobile Flugvorrichtung als halbautonomes oder durch ein autonomes Fahrzeug (Bodenfahrzeug) gesteuertes Fahrzeug beschrieben werden. Die mobile Flugvorrichtung hat jedoch eine eigene Kontrolleinrichtung, mit der sie die durch das Bodenfahrzeug vorgegebene Flugroute umsetzt und ihre Flugbewegung eigenständig stabilisiert.

Gemäß einer Ausführungsform hat die mobile Flugvorrichtung die Funktion, periodisch Bilder oder einen kontinuierlichen Bildstream vom Lagergut und/oder den Lagereinrichtungen an das Bodenfahrzeug zu übermitteln, damit das Bodenfahrzeug dann diese Bilder bzw. den Bildstream auswerten kann.

Definiert man ein sich mit dem Bodenfahrzeug mitbewegendes Bezugssystem als Referenz, kann die mobile Flugvorrichtung beispielsweise so gesteuert werden, dass sie sich immer mit dem Bezugssystem mitbewegt, d. h. jeder Bewegung des Bodenfahrzeugs in horizontaler Richtung (beispielsweise definiert durch eine X-Richtung und eine Y-Richtung) folgt. Die Flughöhe der mobilen Flugvorrichtung, d. h. die Bewegung in einer Z-Richtung, wird von dem Bodenfahrzeug vorgegeben, damit die mobile Flugvorrichtung gezielt einzelne Abschnitte der Lagereinrichtungen anfliegen und dort befindliches Lagergut erfassen kann.

Zur Steuerung der mobilen Flugvorrichtung durch das Bodenfahrzeug weist die mobile Flugvorrichtung eine optische Signaleinrichtung zur Abgabe von Positionssignalen auf. Die von der optischen Signaleinrichtung abgegebenen Positionssignale können durch ein Bilderfassungssystem des Bodenfahrzeugs erfasst und beispielsweise durch eine mit dem Bilderfassungssystem gekoppelte Steuereinheit ausgewertet werden. Dadurch kann die Lage als auch die Position der mobilen Flugvorrichtung durch das Bodenfahrzeug erkannt werden. Unter der Lage soll hier insbesondere die Orientierung, d. h. Drehung um eine vertikale Achse. Die Position der mobilen Flugvorrichtung, genauer beispielsweise der Mittelpunkt der mobilen Flugvorrichtung, wird als Position relativ zum Bezugssystem des Bodenfahrzeugs angesehen.

Das Bilderfassungssystem des Bodenfahrzeugs kann die erfassten Positionssignale auswerten und beispielsweise als Positionsdaten an die Steuereinheit des Bodenfahrzeugs übermitteln. Es ist jedoch auch möglich, dass die Auswertung durch die Steuereinheit direkt erfolgt, d. h. dass die vom Bilderfassungssystem erfassten Bilder direkt an die Steuereinheit übertragen werden. Auch Kombinationen sind möglich, bei denen durch das Bilderfassungssystem eine Vorauswertung erfolgt und die dabei erzeugten Rohdaten an die Steuereinheit übertragen werden.

Gemäß einer Ausführungsform wird die mobile Flugvorrichtung so durch das Bodenfahrzeug gesteuert, dass es sich stets oberhalb eines realen oder virtuellen Referenzpunktes des Bodenfahrzeugs befindet, oder innerhalb eines vorgegebenen Bereichs oberhalb des Bodenfahrzeugs verbleibt. Der Referenzpunkt kann beispielsweise der Ursprung des oben genannten Bezugssystems sein, der beispielsweise auf dem Bodenfahrzeug liegt.

Weist das Bilderfassungssystem des Bodenfahrzeugs beispielsweise mindestens eine vertikal nach oben gerichtete Kamera zur bildlichen Erfassung der mobilen Flugvorrichtung und deren Positionssignalen auf, so kann der vorgegebene Bereich oberhalb des Bodenfahrzeugs beispielsweise durch den Raumwinkelbereich (Beobachtungskonus) definiert werden, der durch die Kamera erfasst wird. Es ist jedoch auch möglich, dass der vorgegebene Bereich lediglich ein Teilbereich des durch die Kamera erfassten Raumwinkelbereichs ist, der beispielsweise rotationssymmetrisch um die optische Achse der Kamera liegt.

Gemäß einer Ausführungsform wird die mobile Flugvorrichtung so gesteuert, dass sie sich immer mittig im Raumwinkelbereich (Beobachtungskonus) der Kamera (des Bilderfassungssystem des Bodenfahrzeugs) befindet.

Gemäß einer Ausführungsform ist die nach oben gerichtete Kamera fest im Bodenfahrzeug verbaut, sodass sich der vorgegebene Bereich für die mobile Flugvorrichtung praktisch wie ein sich nach oben öffnender Konus mit dem Bodenfahrzeug mit bewegt. Es ist jedoch auch möglich, dass die Kamera selbst beweglich am Bodenfahrzeug angeordnet ist, um dadurch der mobilen Flugvorrichtung kontrolliert einen größeren Bewegungsraum oberhalb des Bodenfahrzeugs zu ermöglichen. Dies kann beispielsweise dann günstig sein, wenn sich das Bodenfahrzeug aufgrund lokaler Gegebenheiten nicht nahe genug einer Lagereinrichtung nähern kann und die mobile Flugvorrichtung daher einen zu großen Abstand vom Lagergut hat. Durch ein gezieltes Verkippen oder Drehen der Kamera des Bilderfassungssystems des Bodenfahrzeugs in Richtung der Lagereinrichtung kann die mobile Flugvorrichtung gezielt an das sich in der Lagereinrichtung befindende Lagergut herangeführt werden. Dabei kann die mobile Flugvorrichtung so gesteuert werden, dass sie sich stets mittig im Kamerabild des Bilderfassungssystems des Bodenfahrzeugs befindet.

Die Steuerung der mobilen Flugvorrichtung kann daher eine Regelschleife umfassen. Im einfachsten Fall ist ein Punkt auf der optischen Achse des Bilderfassungssystems des Bodenfahrzeugs der SOLL-Punkt, auf dem sich die mobile Flugvorrichtung beispielsweise mittig im durch das Bilderfassungssystem erfassten Bild befinden soll. Die von der mobilen Flugvorrichtung abgegebenen Positionssignale dienen dazu, die Lage und Position der mobilen Flugvorrichtung im erfassten Bild eindeutig identifizieren zu können. Weicht die Lage und/oder Position (IST-Punkt) der mobilen Flugvorrichtung vom SOLL-Punkt ab, wird die mobile Flugvorrichtung so gesteuert, dass sie sich auf den SOLL-Punkt zubewegt. Durch diese Regelschleife wird sichergestellt, dass die mobile Flugvorrichtung der Bewegung des Bodenfahrzeugs folgt oder, wenn das Bilderfassungssystem der Bodeneinheit beweglich angeordnet ist, die mobile Flugvorrichtung der Bewegung des Bilderfassungssystems folgt.

Es ist jedoch auch möglich, dass die mobile Flugvorrichtung kontrolliert zu einem Punkt außerhalb des auf der optischen Achse liegenden SOLL-Punkts gesteuert wird. Dies kann beispielsweise dadurch erfolgen, dass regeltechnisch der SOLL-Punkt verschoben wird und nicht mehr auf der optischen Achse liegt. Dies kann auch dynamisch erfolgen, d. h. der SOLL-Punkt wird dynamisch mit einem OFFSET verändert.

Gemäß einer Ausführungsform wird für die Steuerung der mobilen Flugvorrichtung die Geschwindigkeit und Richtung der mobilen Flugvorrichtung geregelt. Dazu werden dann nicht lediglich einzelne vom Bilderfassungssystem erfasst Bilder ausgewertet, sondern auch zeitliche Änderungen zwischen zwei oder mehreren Bildern, um die aktuelle Geschwindigkeit und Richtung der mobilen Flugvorrichtung zu ermitteln. Als Steuerbefehle (Stellgröße) werden dann vom Bodenfahrzeug an die mobile Flugvorrichtung die Geschwindigkeit und Richtung übermittelt. Im Falle eines Quadrokopters als mobile Flugvorrichtung sind dies typischerweise Roll (Rollwinkel) und Pitch (Nickwinkel). Damit können die Geschwindigkeit und Richtung eines Quadrokopters beeinflusst werden, ohne dessen Orientierung (Lage), d.h. den Drehwinkel um die vertikale Achse, zu ändern. Die mobile Flugvorrichtung bleibt dadurch ausgerichtet. Die Orientierung kann separat zur Geschwindigkeits- und Richtungsregelung gesteuert werden, wenn eine Änderung der Orientierung gewünscht ist.

Die Regelung der Geschwindigkeit und der Richtung hat den Vorteil, dass die mobile Flugvorrichtung besser gesteuert werden kann, als wenn lediglich die SOLL-Position vorgegeben wird. Dadurch werden die Flugbewegungen besser gedämpft und beispielsweise starke Schwankungen um die SOLL-Position unterdrückt. Die mobile Flugvorrichtung pendelt dann lediglich mit kleinen Pendelbewegungen um die SOLL-Position.

Da die Regelschleife bevorzugt die optische Erkennung durch das Bilderfassungssystem ausnutzt, sollte sich die mobile Flugvorrichtung stets innerhalb des durch das Bilderfassungssystem vorgegebenen Raumwinkelbereichs, in dem eine Beobachtung durch das Bilderfassungssystem möglich ist, befinden. Hierzu kann gemäß einer Ausführungsform eine entsprechende Zwangsregelung vorgesehen werden, mit welcher verhindert wird, dass sich die mobile Flugvorrichtung außerhalb des vom Bilderfassungssystem vorgegebenen Raumwinkelbereichs bewegt.

Die mobile Flugvorrichtung und das Bodenfahrzeug können miteinander kommunizieren und Steuerbefehle sowie Daten austauschen. Dazu weist die mobile Flugvorrichtung eine erste Sende- und Empfangsvorrichtung und das Bodenfahrzeug eine zweite Sende- und Empfangsvorrichtung auf. Gemäß einer Ausführungsform sind die erste und zweite Sende- und Empfangsvorrichtung drahtlos miteinander gekoppelt. Es ist jedoch auch möglich, dass die mobile Flugvorrichtung und das Bodenfahrzeug über eine flexible Kabelverbindung miteinander verbunden sind. In diesem Fall ist es möglich, dass nicht nur ein Austausch von Steuerbefehlen und Daten erfolgt, sondern dass auch die Energieversorgung der mobilen Flugvorrichtung mindestens teilweise oder sogar vollständig durch das Bodenfahrzeug sichergestellt wird.

Gemäß einer Ausführungsform ist die Steuereinheit des Bodenfahrzeugs eingerichtet, von dem Bilderfassungssystem erfasste Bilddaten zu empfangen und zu verarbeiten. Basierend auf den Bilddaten können dann durch die Steuereinheit des Bodenfahrzeugs Steuerbefehle erzeugt und diese über die zweite Send- und Empfangsvorrichtung an die erste Sende- und Empfangsvorrichtung zur Steuerung der mobilen Flugvorrichtung übertragen werden. Die Steuereinheit in Kombination mit dem Bilderfassungssystem bildet daher einen Teil des Regelkreises, um die mobile Flugvorrichtung innerhalb des vorgegebenen Bereichs oder oberhalb des vorgegebenen Referenzpunktes bleibt.

Gemäß einer Ausführungsform erfolgt im Wesentlichen eine periodische Übertragung von Bilddaten bzw. ein kontinuierlicher Stream an Bilder von der mobilen Flugvorrichtung an das Bodenfahrzeug, während das Bodenfahrzeug im Wesentlichen Steuerbefehle an die mobile Flugvorrichtung sendet. Da der Datenstrom von der mobilen Flugvorrichtung zum Bodenfahrzeug deutlich höher sein kann als der Datenstrom vom Bodenfahrzeug zur mobilen Flugvorrichtung, können die erste und zweite Send- und Empfangsvorrichtung entsprechend angepasst sein und ein entsprechendes Kommunikationsprotokoll nutzen.

Die mobile Flugvorrichtung wird somit durch das Bodenfahrzeug entlang der Lagereinrichtungen geführt, d. h. die mobile Flugvorrichtung folgt der Bewegung des Bodenfahrzeugs. Zusätzlich wird die Höhe der mobilen Flugvorrichtung oberhalb des Bodenfahrzeugs durch das Bodenfahrzeug vorgegeben. Dadurch kann die mobile Flugvorrichtung in allen drei Raumrichtungen durch das Bodenfahrzeug kontrolliert geführt werden und beispielsweise die Lagereinrichtungen vollständig abscannen. Die Kontrolle der Flughöhe der mobilen Flugvorrichtung kann ebenfalls über die Regelschleife gesteuert werden, da aus den Positionssignalen der mobilen Flugvorrichtung auch auf eine Entfernung der mobilen Flugvorrichtung relativ zum Bodenfahrzeug geschlossen werden kann. Alternativ oder zusätzlich können andere Sensoren zum Erfassen der Flughöhe verwendet werden.

Für Notfälle, wenn beispielsweise die Kommunikation zwischen dem Bodenfahrzeug und der mobilen Flugvorrichtung unterbrochen ist, verfügt die mobile Flugvorrichtung gemäß einer Ausführungsform über ein Notprogramm, welches die mobile Flugvorrichtung kontrolliert landet. Gerät beispielsweise die mobile Flugvorrichtung außerhalb des durch das Bilderfassungssystems des Bodenfahrzeugs überwachten Raumwinkelbereichs, kann das Bodenfahrzeug die mobile Flugvorrichtung nicht mehr steuern. Das Bodenfahrzeug sendet dann auch keine Steuerbefehle. Das Ausbleiben der Steuerbefehle wird dann von der mobilen Flugvorrichtung als Unterbrechung der Kommunikation zum Bodenfahrzeug interpretiert, und die Landung eingeleitet.

Es ist somit insgesamt möglich, dass die Lagereinrichtungen bzw. das darin gelagerte Lagergut von der ersten Bilderfassungseinrichtung der mobilen Flugvorrichtung bildlich erfasst werden können. Basierend auf den durch die erste Bilderfassungseinrichtung erfassten Bildern können dann auf dem Lagergut bzw. den Lagereinrichtungen angebrachte Etiketten oder optisch-maschinenlesbarer Code ausgelesen werden. Dies kann entweder durch Auswertung der erfassten Bilder oder durch eine spezielle Scaneinrichtung, welche von der mobilen Flugvorrichtung mitgeführt wird, erfolgen.

Die Zweiteilung der Vorrichtung zum Inventarisieren von Lagerbeständen in ein flurgestütztes Fahrzeug (Bodenfahrzeug) und in ein dazu separates luftgestütztes Fahrzeug (mobile Flugvorrichtung) hat sich als vorteilhaft erwiesen.

Zum einen erfolgt eine Trennung von Navigation durch das Warenlager und Erfassen des Lagerguts bzw. der Lagereinrichtungen. Die Navigation erfolgt durch das Bodenfahrzeug, welches dazu sein Umgebungssensorsystem zur Erfassung der Umgebung nutzt. Da das Gewicht des Bodenfahrzeugs weitgehend unkritisch ist, kann auch ein komplexes Umgebungssensorsystem mit mehreren verschiedenen Sensoren verwendet werden. Außerdem kann das Bodenfahrzeug mit einem ausreichend leistungsfähigen Computersystem zur schnellen Auswertung der vom Umgebungssensorsystem gelieferten Daten und einer entsprechend leistungsfähigen Stromversorgung ausgestattet werden. Da sich das Bodenfahrzeug im Wesentlichen in einer zweidimensionalen Ebene bewegt, werden auch geringere Anforderungen an die Rechenleistung für die Navigation in einem zweidimensionalen Umfeld im Vergleich zu einer Navigation in einem dreidimensionalen Umfeld. Müsste die mobile Flugvorrichtung eigenständig navigieren, beispielsweise seine Position (X, Y, Z) ständig bestimmen, wäre hierfür eine größere Rechenleistung erforderlich. Durch die hier erfolgte Trennung wird dies vermieden.

Darüber hinaus ist es beispielsweise möglich, dass sich das Bodenfahrzeug von entlang in den Boden eingelassenen Markierungen oder Sensoren bewegt. Dadurch wird die Genauigkeit der eigenen Positionsbestimmung deutlich erhöht.

Zum anderen muss die mobile Flugvorrichtung lediglich mit einer Eigensteuerung zur Umsetzung der vom Bodenfahrzeug empfangenen Steuerbefehle ausgestattet werden. Es ist nicht erforderlich, dass die mobile Flugvorrichtung über ein eigenständiges System zur Erkennung der eigenen Position innerhalb des Warenlagers verfügt. Dadurch kann Gewicht eingespart und die mobile Flugvorrichtung entsprechend leicht ausgeführt werden, oder es kann beispielsweise ein größerer Akkumulator für eine verbesserte Stromversorgung mitgeführt werden.

Darüber hinaus ist es nicht notwendig, dass die mobile Flugvorrichtung über eine aufwändige Bildverarbeitung zur Auswertung der von der ersten Bilderfassungseinrichtung der mobilen Flugvorrichtung erfassten Bilder verfügt. Da für eine schnelle Bildverarbeitung eine entsprechend hohe Rechenleistung erforderlich ist, bedarf es auch hierfür zusätzlicher Hardware, welche das Gewicht der mobilen Flugvorrichtung erhöhen würde. Die Bildverarbeitung der von der ersten Bilderfassungseinrichtung der mobilen Flugvorrichtung erfassten Bilder kann durch das leistungsfähige Computersystem des Bodenfahrzeugs erfolgen. Es ist jedoch auch möglich, dass die mobile Flugvorrichtung bereits eine Vorverarbeitung der erfassten Bilder durchführt.

Gemäß einer Ausführungsform erfolgt die Bildverarbeitung und Auswertung der von der ersten Bilderfassungseinrichtung der mobilen Flugvorrichtung erfassten Bilder durch das Bodenfahrzeug. Die mobile Flugvorrichtung streamt lediglich kontinuierlich Bilder vom Lagergut und/oder den Lagereinrichtungen an das Bodenfahrzeug.

Durch die Trennung in ein flurgestütztes Fahrzeug und ein luftgestütztes Fahrzeug kann daher eine grundsätzlich höhere Rechenleistung für die Bilderfassung und Bildauswertung zur Verfügung gestellt werden, wodurch die Genauigkeit und Robustheit der Inventarisierung verbessert wird. Darüber hinaus kann das erforderliche Nutzgewicht der mobilen Flugvorrichtung verringert werden, wodurch entweder kleinere mobile Flugvorrichtungen zum Einsatz kommen oder größere Akkumulatoren mitgeführt werden können. Auch die Arbeitssicherheit wird durch diese Trennung erhöht, da zum einen kleineren mobile Flugvorrichtung eingesetzt werden können und zum anderen durch das Bodenfahrzeug klare erkennbare Warnsignal an Personal ausgesendet werden kann.

Zur Verbesserung der Erkennbarkeit der mobilen Flugvorrichtung weist die optische Signaleinrichtung, gemäß einer Ausführungsform, eine Vielzahl von nach unten abstrahlenden optischen Signalquellen auf. Die einzelnen optischen Signalquellen können in einem vorgegebenen Muster verteilt an der mobilen Flugvorrichtung angeordnet sein. Zur weiteren Verbesserung der Erkennbarkeit können mindestens zwei der Signalquellen optische Strahlung mit unterschiedlicher Wellenlänge emittieren, d. h. in unterschiedlicher Farbe leuchten. Aus Redundanzgründen können, gemäß einer Ausführungsform, mindestens drei Signalquellen optische Strahlung mit unterschiedlicher Wellenlänge emittieren, d. h. in unterschiedlichen Farben leuchten.

Bei dem vorgegebenen Muster kann es sich um ein beliebiges Muster handeln. Günstig kann es sein, wenn das Muster eindeutige Rückschlüsse auf die Lage (Orientierung, d. h. Drehung um eine vertikale Achse) der mobilen Flugvorrichtung gestattet. Beispielsweise könnte das vorgegebene Muster in Form eines Pfeils vorliegen. Zusätzlich kann hier mit Signalquellen mit unterschiedlicher Farbe zur Verbesserung der Erkennbarkeit gearbeitet werden. Wenn das Muster ein regelmäßiges Muster ist, aus dem allein keine Rückschlüsse auf beispielsweise die Orientierung der mobilen Flugvorrichtung gewonnen werden können, werden bevorzugt Signalquellen mit unterschiedlicher Farbe, mindestens zwei, bevorzugt mindestens drei unterschiedliche Farben, verwendet. Aus der bevorzugt eindeutigen Verteilung der unterschiedlich farbigen Signalquellen lässt sich dann eindeutig auf die Lage der mobilen Flugvorrichtung schließen.

Eine einfache Variante stellt beispielsweise die Anordnung der Signalquellen an den einzelnen Armen einer Drohne dar. Die mobile Flugvorrichtung kann beispielsweise mindestens vier Arme aufweisen, an denen jeweils ein Motor mit jeweils einem Propeller angeordnet ist. An jedem Arm ist mindestens eine optische Signalquellen, bevorzugt mindestens zwei optische Signalquellen, die günstigerweise voneinander beabstandet sind, angeordnet. Dadurch werden, aus Sicht des Bodenfahrzeugs, beispielsweise zwei ineinanderliegende Quadrate oder Rechtecke gebildet. Die beiden in einer Vorwärtsrichtung der mobilen Flugvorrichtung weisenden Arme können beispielsweise mit Signalquellen gleicher Farbe ausgestattet werden, die beiden in einer Rückwärtsrichtung der mobilen Flugvorrichtung weisenden Arme können dagegen mit Signalquellen mit unterschiedlicher Farbe ausgestattet werden.

Die mobile Flugvorrichtung verfügt gemäß einer Ausführungsform über eine eigene Kontrolleinrichtung, welche mehrere Funktionen übernehmen kann. Zum einen wird die eigene Flugbewegung der mobilen Flugvorrichtung nach Vorgabe der Steuerbefehle, welche die mobile Flugvorrichtung vom Bodenfahrzeug erhält, umgesetzt und die eigene Flugbewegung stabilisiert. Darüber hinaus kann die Steuerung der optionalen Scaneinrichtung durch die Kontrolleinrichtung erfolgen. Ebenso kann die Kontrolleinrichtung eine Teil- oder Vollauswertung der durch die erste Bilderfassungseinrichtung und/oder zweite Bilderfassungseinrichtung erfassten Bilder übernehmen, aus denen entweder lediglich die Lage eines optisch-maschinenlesbaren Codes erkannt und für die Steuerung der Scaneinrichtung verwendete wird, oder der optisch-maschinenlesbare Code erkannt und vollständig ausgelesen wird. Typischerweise erfolgt, gemäß einer Ausführungsform, eine Übertragung der erfassten Bilddaten an das Bodenfahrzeug ohne aufwändige Bildverarbeitung durch die mobile Flugvorrichtung, da das Bodenfahrzeug über eine erheblich leistungsfähigere Datenverarbeitung (Computersystem) verfügt als die mobile Flugvorrichtung.

Die vorstehend genannten Funktionen können entweder von einer einzelnen zentralen Steuereinheit, welche dann die Kontrolleinrichtung gebildet, oder von getrennten Einheiten übernommen werden, die daten-technisch und/oder signal-technisch miteinander verbunden sind. So kann für die Steuerung der optionalen Scaneinrichtung eine Steuereinrichtung und für die Auswertung (teilweise Auswertung oder vollständige Auswertung) der erfassten Bilder eine Auswerteeinrichtung vorgesehen werden. Die Steuerung der Flugbewegung kann durch eine Flugsteuereinrichtung erfolgen. Zusammen können diese Einrichtungen die Kontrolleinrichtung der mobilen Flugvorrichtung bilden. Typischerweise erfolgt, gemäß einer Ausführungsform, die Steuerung der optionalen Scaneinrichtung durch das Bodenfahrzeug, da dieses zentral die von der mobilen Flugvorrichtung erfassten und an das Bodenfahrzeug übertragenen Bilder (Bildstream) auswertet und dann entsprechende Steuerbefehle an die mobile Flugvorrichtung, auch für die optionale Scaneinrichtung, sendet.

Gemäß einer Ausführungsform verfügt die mobile Flugvorrichtung über mindestens eine Scaneinrichtung, z.B. einen Barcodescanner. Dieser kann beweglich an der mobilen Flugvorrichtung angeordnet sein und insbesondere durch das Bodenfahrzeug gesteuert werden. Die Scaneinrichtung dient primär dem Auslesen des optisch-maschinenlesbare Codes, der zuvor in den von der ersten und/oder zweiten Bilderfassungseinrichtung erfassten Bildern erkannt wurde.

Gemäß einer Ausführungsform weist die mobile Flugvorrichtung weiterhin einen TOF-Sensor (Time-of-Flight) auf. Dieser kann beispielsweise an der Scaneinrichtung angebracht sein und zusammen mit dieser bewegt werden. Mittels des TOF-Sensors ist es möglich, zum einen den Abstand zum Lagergut zu erfassen und diese Information für die Steuerung der mobilen Flugvorrichtung, insbesondere zur Verbesserung der Steuerung der Position der mobilen Flugvorrichtung, zu nutzen. Zum anderen ist es möglich, dass der TOF-Sensor auch zur Erkennung von Lagergut und freien Lagerstellen verwendet wird. Dadurch können beispielsweise leere Lagerstellen (Stellplätze für Lagergut/Pakete) erkannt werden. Das Erkennen solcher leeren Lagerstellen kann entweder nur per TOF-Sensor erfolgen, nur per Bilderfassungseinrichtung, oder auch aus Redundanzgründen sowohl mittels TOF-Sensor als auch mittels Bildererfassungseinrichtung.

Gemäß einer Ausführungsform weist das Bodenfahrzeug weiterhin eine Start- und Landeplattform auf, auf welcher die mobile Flugvorrichtung landen kann. Wenn beispielsweise das Bodenfahrzeug eine längere Strecke zurücklegen muss, ohne dass ein Scannen von Lagergut erforderlich ist, kann die mobile Flugvorrichtung beispielsweise auf der Start- und Landeplattform landen und dann vom Bodenfahrzeug zum Zielgebiet gebracht werden. Dadurch spart die mobile Flugvorrichtung Energie. Auch kann die mobile Flugvorrichtung so gemeinsam mit dem Bodenfahrzeug außer Betrieb genommen und zu einem speziell vorgesehenen Parkplatz fahren, damit beispielsweise das Bodenfahrzeug und/oder die mobile Flugvorrichtung wieder aufgeladen werden können.

Gemäß einer Ausführungsform weist das Bodenfahrzeug weiterhin eine Ladeschnittstelle zum Laden eines Akkumulators der mobilen Flugvorrichtung auf. Typischerweise ist die Kapazität von Akkumulatoren von mobilen Flugvorrichtungen aufgrund von Gewichtsbeschränkungen limitiert, sodass die Flugzeit der mobilen Flugvorrichtung beschränkt ist. Daher ist ein regelmäßiges Laden des Akkumulators notwendig. Dies kann einfach dadurch erfolgen, dass die mobile Flugvorrichtung bei Unterschreiten eines gegebenen Ladezustands automatisch auf der Start- und Landeplattform landet und dann manuell der Akkumulator der mobilen Flugvorrichtung entnommen und mit der im Bodenfahrzeug vorgesehenen Ladeschnittstelle verbunden wird.

Alternativ ist es möglich, dass der Akkumulator beispielsweise induktiv geladen wird und nicht aus der mobilen Flugvorrichtung entnommen werden muss. Dazu können dann entsprechende Induktionsschleifen sowohl im Bodenfahrzeug, insbesondere in der Start- und Landeplattform, als auch in der mobilen Flugvorrichtung vorgesehen sein. Das Laden des Akkumulators der mobilen Flugvorrichtung kann dann vollautomatisch ohne Eingreifen von Bedienpersonal erfolgen.

Da das Gewicht des Bodenfahrzeugs eher unkritisch ist, kann dieses mit einer eigenen ausreichend dimensionierten Stromversorgung ausgestattet sein, sodass ein mehrfaches Laden des Akkumulators der mobilen Flugvorrichtung möglich ist, ohne dass das Bodenfahrzeug dazu jedes Mal zu einer eigenen Ladestation fahren muss. Es ist jedoch auch möglich, dass während des Ladens des Akkumulators das Bodenfahrzeug zu einer Ladestation fährt, um selbst aufgeladen zu werden, um die notwendige Ladezeit für den Akkumulator effektiv auszunutzen.

Bei einem manuellen Ausbau des Akkumulators, um diesen zu laden, ist es jedoch auch möglich, dass der entladene Akkumulator durch einen vollgeladenen Akkumulator getauscht wird und der entladene Akkumulator mit der am Bodenfahrzeug vorgesehenen Ladeschnittstelle verbunden wird. Dadurch kann die mobile Flugvorrichtung unmittelbar wieder in Betrieb genommen und die Inventarisierung fortgesetzt werden. In dieser Zeit wird der entladene Akkumulator durch das Bodenfahrzeug wieder aufgeladen, bis der nun aktuell in der mobilen Flugvorrichtung eingebaute Akkumulator entladen ist. Sollte das Laden eines Akkumulators länger dauern als die mögliche Flugzeit mit einem Akkumulator, kann das Bodenfahrzeug auch zwei oder drei Ladeschnittstellen zur Aufnahme der entsprechenden Anzahl von Akkumulatoren ausgestattet sein.

Gemäß einer Ausführungsform wird weiterhin ein Verfahren zum Inventarisieren von Lagerbeständen vorgeschlagen, aufweisend:
Bewegen eines Bodenfahrzeugs und einer durch das Bodenfahrzeug gesteuerten mobilen Flugvorrichtung durch ein Lager mit Lagereinrichtungen, in denen Lagergut gelagert ist, wobei die Bewegung der mobile Flugvorrichtung durch das Bodenfahrzeug derart gesteuert wird, dass die mobile Flugvorrichtung oberhalb des Bodenfahrzeugs und innerhalb eines durch das Bodenfahrzeug vorgegebenen Bereichs bleibt;
Erfassen eines Bildes von Lagergut und/oder Lagereinrichtungen durch eine erste Bilderfassungseinrichtung der mobilen Flugvorrichtung;
Verarbeiten des Bildes zur Erkennung, ob ein optisch-maschinenlesbarer Code am Lagergut und/oder an der Lagereinrichtung angebracht ist;
Auslesen des optisch-maschinenlesbaren Codes;
Zuordnen von positions-bezogenen Daten zum ausgelesenen optisch-maschinenlesbaren Code, wobei die positions-bezogenen Daten aus der Position des Bodenfahrzeugs und/oder der mobilen Flugvorrichtung abgeleitet werden; und
optionales Übertragen des ausgelesenen optisch-maschinenlesbaren Codes und der zugeordneten positions-bezogenen Daten an eine zentrale Rechnereinheit.

Das Bodenfahrzeug kann dabei wie bereits weiter oben beschrieben autonom agieren und sich selbstständig durch das Lager bewegen. Die Steuerung der mobilen Flugvorrichtung durch das Bodenfahrzeug kann ebenfalls wie oben beschrieben erfolgen.

Zum Erfassen und Auslesen des optisch-maschinenlesbaren Codes können verschiedene Varianten zum Einsatz kommen. Zum einen ist es möglich, dass der optisch-maschinenlesbare Code innerhalb des durch die erste Bilderfassungseinrichtung erfassten Bildes erkannt, aus diesem Bild extrahiert und dann ausgelesen wird. Alternativ ist es möglich, dass lediglich eine Erkennung, ob ein optisch-maschinenlesbarer Code vorliegt, erfolgt. Wird ein solcher Code erkannt, erfolgt ein separates Erfassen und Auslesen des optisch-maschinenlesbaren Codes durch eine bewegbare Scaneinrichtung, die an der mobilen Flugvorrichtung angebracht ist.

Zur Erhöhung der Auslesedichte kann die mobile Flugvorrichtung neben der ersten Bilderfassungseinrichtung auch eine zweite Bilderfassungseinrichtung aufweisen, die auf unterschiedlichen Seiten der mobilen Flugvorrichtung, oder sogar auf der gleichen Seite der mobilen Flugvorrichtung angeordnet sind. Beide Bilderfassungseinrichtungen können auch mittig angeordnet und in die gleiche Richtung oder in unterschiedliche Richtungen weisen. Zusätzlich kann neben der ersten Scaneinrichtung auch eine zweite Scaneinrichtung vorgesehen sein.

Ist der optisch-maschinenlesbare Code ausgelesen, werden diesem Positionbezogene Daten zugeordnet. Die Position-bezogenen Daten ergeben sich insbesondere aus der Position des Bodenfahrzeugs und der mobilen Flugvorrichtung, oder aus der absoluten Position der Flugvorrichtung allein, sofern diese ausreichend bestimmt ist. Grundsätzlich ist die Position des Bodenfahrzeugs bekannt, da es seine Position mittels des Umgebungssensorsystems und gegebenenfalls weiterer Sensoren sicher bestimmen kann. Zu dieser bekannten Position in X-Richtung und Y-Richtung eines bezüglich des Lagers fest vorgegebenen Bezugssystems (sogenanntes Weltkoordinatensystem) tritt noch die Position in Z-Richtung, welche durch die relative Höhe der mobilen Flugvorrichtung oberhalb des Bodenfahrzeugs definiert sein kann. Das Bodenfahrzeug, welches die mobile Flugvorrichtung steuert, kennt daher auch dessen Höhe. Aus diesen Informationen ist es möglich, die absolute Position des optisch-maschinenlesbaren Codes und damit des Lagerguts oder der Lagereinrichtung, an dem der optisch-maschinenlesbare Code befestigt ist, in dem fest vorgegebenen Bezugssystem (Weltkoordinatensystem) zu bestimmen. Eine eindeutige Bestimmung einer Position in dem Warenlager, beispielsweise Regal Nummer A und Regalfachnummer B, ist daher möglich.

Diese Daten, d. h. der ausgelesene optisch-maschinenlesbare Code und die diesem zugeordneten Position-bezogenen Daten, können dann an eine zentrale stationäre Rechnereinheit, welche eine Datenbank für den Warenbestand hostet, übertragen werden. Dies kann entweder direkt von der mobilen Flugvorrichtung oder durch das Bodenfahrzeug erfolgen. Die so übermittelten Daten können dann mit dem Warenbestand abgeglichen und der Warenbestand datentechnisch angepasst werden.

Wie bereits weiter oben dargelegt, kann sich das Bodenfahrzeug autonom entlang von Lagereinrichtungen bewegen, wobei die mobile Flugvorrichtung dieser Bewegung in X-Richtung und Y-Richtung folgt. Zum Erfassen des Lagerguts durch die mobile Flugvorrichtung wird deren Flughöhe durch das Bodenfahrzeug gesteuert, sodass die erste Bilderfassungseinrichtung der mobilen Flugvorrichtung etwa auf Höhe des zu erfassenden Lagerguts ist und dieses bildlich durch die erste Bilderfassungseinrichtung erfasst werden kann. Dies kann beispielsweise auch systematisch erfolgen, indem das Bodenfahrzeug schrittweise entlang einer Lagereinrichtung fährt und während der Stoppphasen die mobile Flugvorrichtung in vertikaler Richtung steuert, sodass alle Lagerbestände in vertikaler Richtung an dieser Position (gegebene X- und Y-Position) gescannt werden.

Zur sicheren Steuerung der mobilen Flugvorrichtung kann gemäß einer Ausführungsform zyklisch die mobile Flugvorrichtung durch das Bilderfassungssystem des Bodenfahrzeugs erfasst und die Position der mobilen Flugvorrichtung relativ zum Bodenfahrzeug durch Erkennen der optischen Signaleinrichtung der mobilen Flugvorrichtung bestimmt werden. Auf Basis der bestimmten Position der mobilen Flugvorrichtung werden dann Steuerbefehle durch die Steuereinheit des Bodenfahrzeugs erzeugt und an die mobile Flugvorrichtung übermittelt, um die Position der mobilen Flugvorrichtung oberhalb eines Referenzpunktes des Bodenfahrzeugs zu halten, auch wenn sich das Bodenfahrzeug bewegt.

Die Position der mobilen Flugvorrichtung in X-und Y-Richtung lässt sich insbesondere bei Verwendung von mehreren Signalquellen mit verschiedenen Farben leicht und zuverlässig erkennen. Die Flughöhe der mobilen Flugvorrichtung lässt sich beispielsweise aus der (scheinbaren) Größe des Musters der optischen Signalquellen in den durch das Bilderfassungssystem des Bodenfahrzeugs erfassten Bilder bestimmen, da die reale Größe des Muster bekannt ist. Durch einfache trigonometrische Beziehungen kann dann die Flughöhe relativ zum Bodenfahrzeug und damit auch relativ zum Boden des Warenlagers ermittelt werden. Gegebenenfalls können weitere Sensoren beispielsweise Ultraschallsensoren verwendet werden, um die Flughöhe sicher zu bestimmen.

Gemäß einer alternativen Ausführungsform kann eine Vorrichtung zum Inventarisieren von Lagerbeständen auch ohne separates Bodenfahrzeug vorgesehen sein. In diesem Fall kann eine mobile Vorrichtung bereitgestellt werden, die entweder eine mobile Flugvorrichtung oder eine auf einem Fahrzeug befestigbare Vorrichtung ist. In beiden Fällen sind die Mittel zur Bestimmung der eigenen Position und zum Auslesen und Auszuwerten des optisch-maschinenlesbaren Codes in dieser Vorrichtung integriert. Damit ist es möglich, eine kompakte Vorrichtung bereitzustellen.

Gemäß einer Ausführungsform weist dazu eine Vorrichtung zum Inventarisieren von Lagerbeständen mindestens eine erste Bilderfassungseinrichtung zum bildlichen Erfassen von Lagergut und/oder von Lagereinrichtungen auf.

Weiterhin kann die Vorrichtung eine relativ zur ersten Bilderfassungseinrichtung bewegbare erste Scaneinrichtung aufweisen. Eine solche Scaneinrichtung ist dazu ausgebildet, einen optisch-maschinenlesbaren Code lesen zu können.

Zudem kann eine Kontrolleinrichtung vorgesehen sein, wobei diese insbesondere eine Steuereinrichtung und eine Auswertungseinrichtung umfassen kann, und wobei diese zum Zwecke des Datenaustausches miteinander verbunden sein können. Die Kontrolleinrichtung ist dabei insbesondere funktional zu verstehen, sodass eine gegenständliche Ausgestaltung als separate Steuereinrichtung und damit verbundene Auswerteeinrichtung davon mitumfasst sei.

Die Kontrolleinrichtung ist dabei so ausgebildet und mit der ersten Bilderfassungseinrichtung verbunden, dass das Vorhandensein eines am Lagergut und/oder an den Lagereinrichtungen angebrachten optisch-maschinenlesbaren Codes erkannt, dessen Position ermittelt, und/oder positions-bezogenen Daten des optisch-maschinenlesbaren Codes ausgegeben werden können. Dazu sind geeignete Komponenten und Algorithmen vorgesehen, sodass die Signale der ersten Bilderfassungseinrichtung zum oben genannten Zweck analysiert und interpretiert werden können. Insbesondere ist die erste Bilderfassungseinrichtung derart ausgebildet, dass eine ausreichende Signalqualität bereitgestellt werden kann, um oben genannte Zwecke zu ermöglichen.

Weiterhin kann die Kontrolleinrichtung derart ausgestaltet und mit der ersten Scaneinrichtung verbunden sein, dass die erste Scaneinrichtung hinsichtlich ihrer optischen Ausrichtung auf den optisch-maschinenlesbaren Code ausgerichtet werden kann. Insbesondere ist die Scaneinrichtung bezüglich zweier Achsen verstellbar ausgestaltet, wobei eine translatorische Verschiebung der Scaneinrichtung nicht zwingend notwendig ist, jedoch eine Manipulation einer Blickrichtung der Scaneinrichtung mindestens in Hochachse und/oder Querachse - oder entsprechenden Pendant-Achsen -zu erfolgen hat.

Gemäß einer Ausführungsform erfolgt die Ausrichtung der ersten Scaneinrichtung mittels einer dazu vorgesehenen und entsprechend ausgeführten Steuereinrichtung.

Dadurch ergibt sich erstmalig die Möglichkeit, die Erfassung von Waren und logistischen Einheiten in einem Palettenlager kostengünstig und effizient durchzuführen. Insbesondere wird der Bedarf an menschlicher Arbeitskraft reduziert, denn insbesondere mithilfe einer mobilen, insbesondere fliegenden, ausgestalteten Vorrichtung gemäß einer der genannten Ausführungsformen wird ermöglicht, dass in gleicher Weise obere und untere Regale hinsichtlich ihres Inhaltsinventarisierung werden können. Weiterhin ergibt sich eine Verbesserung in der Qualität der Inventarisierung, insbesondere da die Fehleranfälligkeit reduziert wird.

Gemäß einer Ausführungsform weist ein Verfahren zum Inventarisieren von Lagerbeständen, folgendes auf: Bewegen einer mobilen Vorrichtung, insbesondere einer mobilen Vorrichtung gemäß einem der vorherigen Ansprüche, entlang von Lagergut und/oder einer Lagereinrichtung; Erfassen eines ersten Bildes vom Lagergut und/oder der Lagereinrichtung durch eine erste Bilderfassungseinrichtung der mobilen Vorrichtung; Verarbeiten des ersten Bildes zur Erkennung, ob ein optisch-maschinenlesbarer Code am Lagergut und/oder an der Lagereinrichtung angebracht ist und nachfolgendes Ermitteln von ersten positions-bezogenen Daten des am Lagergut und/oder an der Lagereinrichtung angebrachten optisch-maschinenlesbaren Codes; Übermitteln der ersten positions-bezogenen Daten an eine bewegbare erste Scaneinrichtung der mobilen Vorrichtung; Ausrichten der ersten Scaneinrichtung auf den optisch-maschinenlesbaren Code; und Auslesen des optisch-maschinenlesbaren Codes durch die erste Scaneinrichtung.

Gemäß einer Ausführungsform der Erfindung, wird überprüft ob der optisch-maschinenlesbare Code erfolgreich ausgelesen wurde. Im negativen Fall kommt die Ausführungsform des zuvor beschriebenen Verfahrens zum Einsatz, in dem ein zweites Bild des Lagerguts und/oder der Lagereinrichtung durch die erste Bilderfassungseinrichtung aufgenommen wird, daraus die Position des maschinenlesbaren Codes bestimmt wird, die erste Scaneinrichtung abermals auf den maschinenlesbaren Code ausgerichtet wird, insbesondere jetzt mit einer neuen Position, sodass der auslesbare Code erfolgreich ausgelesen werden kann. Auf diese Weise wird ermöglicht, dass ein fehlerhaftes und/oder unvollständiges Auslesen zu einem abermaligen Durchführen des Verfahrens führt, und - obgleich die mobile Vorrichtung sich bereits weiter bewegt hat - der maschinen-auslesbare Code desselben Lagerguts und/oder derselben Lagereinrichtung nun erfolgreich ausgelesen werden kann.

Gemäß einer Ausführungsform bewegt sich die Vorrichtung, insbesondere ausgebildet als mobile Vorrichtung, während der Ausführung des Verfahrens gemäß einer der zuvor beschriebenen Ausführungsformen an einem Lagergut und/oder an einer Lageeinrichtung vorbei. Das Verfahren, bzw. Ausführungsformen davon, betrifft somit ein Auslesen im Vorbeiflug, Vorbeifahren, und/oder im Vorbeigehen.

Gemäß einer Ausführungsform wird mittels einer Scanbeleuchtung, insbesondere der ersten Scanvorrichtung, ein Beleuchtungsfleck auf dem Lagergut und oder auf der Lagereinrichtung erzeugt. Dieser Beleuchtungsfleck wird von der ersten Bilderfassungseinrichtung mit erfasst, wobei daraus ein Rückschluss auf eine Ausrichtung der ersten Scaneinrichtung getroffen wird. Somit kann die Interpretation des Beleuchtungsflecks eine Validierung der Ausrichtung der ersten Scaneinrichtung bewirken. Insbesondere wird die somit erkannte Position des Beleuchtungsfleck, und insbesondere die daraus bekannte Ausrichtung der Scaneinrichtung, dazu verwendet die erste Scaneinrichtung derart nach zu führen, dass der maschinen-auslesbare Code erfolgreich ausgelesen werden kann.

Nachfolgend werden mehrere exemplarische Ausführungsformen beschrieben, die beliebig miteinander kombinierbar sind.

### Ausführungsform 1:

Vorrichtung zum Inventarisieren von Lagerbeständen, aufweisend:
- mindestens eine erste Bilderfassungseinrichtung zum bildlichen Erfassen von Lagergut und/oder von Lagereinrichtungen,
- mindestens eine relativ zur ersten Bilderfassungseinrichtung bewegbare erste Scaneinrichtung zum Auslesen von optisch-maschinenlesbaren Codes, und
- eine Kontrolleinrichtung, insbesondere aufweisend eine Steuereinrichtung und eine mit der Steuereinrichtung verbundene Auswertungseinrichtung,
- wobei die Kontrolleinrichtung, insbesondere die Auswertungseinrichtung, derart mit der ersten Bilderfassungseinrichtung verbunden und ausgebildet ist, sodass das Vorhandensein eines am Lagergut und/oder an den Lagereinrichtungen angebrachten optisch-maschinenlesbaren Codes erkannt, dessen Position zu ermittelt, und/oder positions-bezogenen Daten des optisch-maschinenlesbaren Codes ausgegeben werden kann, und
- wobei die Kontrolleinrichtung, insbesondere die Steuereinrichtung, derart mit der ersten Scaneinrichtung verbunden und ausgebildet ist, sodass die erste Scaneinrichtung hinsichtlich ihrer optischen Ausrichtung auf den optisch-maschinenlesbaren Code ausgerichtet werden kann.

### Ausführungsform 2:

Vorrichtung nach Ausführungsform 1, wobei die erste Bilderfassungseinrichtung einen mit der Kontrolleinrichtung, insbesondere mit der Auswerteeinrichtung, gekoppelten Bildsensor aufweist, um vom Bildsensor erfasste Bilddaten auf die Auswerteeinrichtung zu übertragen, wobei die Kontrolleinrichtung, insbesondere die Auswerteeinrichtung, eingerichtet ist, basierend auf den erfassten Bilddaten das Vorhandensein und die positions-bezogenen Daten des optisch-maschinenlesbaren Codes am Lagergut und/oder der Lagereinrichtung zu ermitteln und an die erste Scaneinrichtung zu übermitteln.

### Ausführungsform 3:

Vorrichtung nach Ausführungsform 1 oder 2, wobei die erste Scaneinrichtung eine optische Scankamera zum Erfassen des optisch-maschinenlesbaren Codes, mindestens eine Halterung und einen Antrieb für die Scankamera aufweist, um die Scankamera relativ um mindestens eine Achse zu bewegen, wobei die Halterung mindestens ein Drehlager mit einem optionalem Dämpfungselement aufweist, insbesondere wobei die Halterung für die Scankamera eine Drehung um mindestens zwei Achsen ermöglicht, und/oder insbesondere wobei die Halterung für die Scankamera eine kardanische Aufhängung ist und die beiden Drehachsen der kardanischen Aufhängung jeweils von einem separaten Antrieb antreibbar und unabhängig voneinander durch die Kontrolleinheit, insbesondere durch die Steuereinrichtung ansteuerbar sind.

### Ausführungsform 4:

Vorrichtung nach einem der Ausführungsformen 2 bis 3, wobei die erste Scaneinrichtung weiterhin eine Bildbeleuchtung aufweist, welche zusammen mit der Scankamera in der Halterung gehalten und zusammen mit der Scankamera bewegbar ist, wobei die Bildbeleuchtung eingerichtet ist, einen Beleuchtungsfleck auf dem Lagergut und/oder der Lagereinrichtung zu erzeugen, der optional von der ersten Bilderfassungseinrichtung erfasst und dessen Position von der mit der ersten Bilderfassungseinrichtung gekoppelten Kontrolleinheit, insbesondere Auswerteeinrichtung, ermittelbar ist.

### Ausführungsform 5:

Vorrichtung nach einem der Ausführungsformen 1 bis 4, weiterhin aufweisend mindestens einen Abstandssensor, insbesondere mindestens zwei in unterschiedliche Richtungen ausgerichtete Abstandssensoren, die mit der Kontrolleinrichtung, insbesondere der Steuereinrichtung, der Vorrichtung gekoppelt sind.

### Ausführungsform 6:

Vorrichtung nach einem der Ausführungsformen 1 bis 5, weiterhin aufweisend mindestens eine Positionsbestimmungseinrichtung zur Ermittlung der Position der Vorrichtung relativ zu einem Markierungspunkt, insbesondere wobei die Positionsbestimmungseinrichtung eine Stereokamera aufweisen kann.

### Ausführungsform 7:

Vorrichtung nach einem der Ausführungsformen 1 bis 6, weiterhin aufweisend eine zweite Bilderfassungseinrichtung und eine zweite bewegbare Scaneinrichtung, wobei die erste Bilderfassungseinrichtung und die erste bewegbare Scaneinrichtung ein erstes Modul auf einer ersten Seite der Vorrichtung bilden und die zweite Bilderfassungseinrichtung und die zweite bewegbare Scaneinrichtung ein zweites Modul auf einer der ersten Seite gegenüberliegenden zweiten Seite der Vorrichtung bilden.

### Ausführungsform 8:

Vorrichtung nach einem der Ausführungsformen 1 bis 7, weiterhin aufweisend eine drahtlose Schnittstelle zur Datenkommunikation der Vorrichtung mit einer zentralen Rechnereinheit.

### Ausführungsform 9:

Vorrichtung nach einem der Ausführungsformen 1 bis 8, wobei die Bilderfassungseinrichtung einen größeren optischen Öffnungswinkel definiert als die Scaneinrichtung.

### Ausführungsform 10:

Vorrichtung nach einem der Ausführungsformen 1 bis 9, aufweisend einen Sensor zum Erkennen und Auslesen von nicht-optischen maschinenlesenbaren Codes.

### Ausführungsform 11:

Vorrichtung nach einem der Ausführungsformen 1 bis 10, wobei die Vorrichtung als mobile Vorrichtung ausgebildet ist, insbesondere wobei die mobile Vorrichtung als teilodervollautonome und/oder ferngesteuerte, fliegende, gleitende und/oder fahrende Drohne, als bemanntes und/oder ferngesteuertes Fahrzeug, als Flurförderzeug, als Flurfördergerät oder als autonomes Fahrzeug ausgebildet ist.

### Ausführungsform 12:

Verfahren zum Inventarisieren von Lagerbeständen, aufweisend:
- Bewegen einer mobilen Vorrichtung, insbesondere einer Vorrichtung gemäß einem oder mehrere der Ausführungsformen 1 bis 11, insbesondere gemäß Ausführungsform 11, entlang von Lagergut und/oder einer Lagereinrichtung;
- Erfassen eines ersten Bildes eines Lagerguts und/oder einer Lagereinrichtung durch eine erste Bilderfassungseinrichtung der Vorrichtung;
- Verarbeiten des ersten Bildes zur Erkennung, ob ein optisch-maschinenlesbarer Code am Lagergut und/oder an der Lagereinrichtung angebracht ist und nachfolgendes Ermitteln von ersten positions-bezogenen Daten des am Lagergut und/oder an der Lagereinrichtung angebrachten optisch-maschinenlesbaren Codes;
- Übermitteln der ersten positions-bezogenen Daten an eine bewegbare erste Scaneinrichtung der Vorrichtung;
- Ausrichten der ersten Scaneinrichtung auf den optisch-maschinenlesbaren Code; und
- Auslesen des optisch-maschinenlesbaren Codes durch die erste Scaneinrichtung.

### Ausführungsform 13:

Verfahren nach Ausführungsform 12, weiterhin aufweisend:
- Erfassen, insbesondere nachdem und/oder während die mobile Vorrichtung weiterbewegt wurde/wird, eines zweiten Bildes des Lagerguts und/oder der Lagereinrichtungen durch die erste Bilderfassungseinrichtung;
- Verarbeiten des zweiten Bildes zur Erkennung eines optisch-maschinenlesbaren Codes und nachfolgendes Ermitteln von zweiten positions-bezogenen Daten des am Lagergut und/oder an den Lagereinrichtungen angebrachten optisch-maschinenlesbaren Codes;
- Übermitteln der zweiten positions-bezogenen Daten an die bewegbare erste Scaneinrichtung der mobilen Vorrichtung;
- Ausrichten der ersten Scaneinrichtung auf den optisch-maschinenlesbaren Code; und
- erneutes Auslesen des optisch-maschinenlesbaren Codes durch die erste Scaneinrichtung.

### Ausführungsform 14:

Verfahren nach Ausführungsform 12 oder 13,
- wobei durch Erzeugen eines Beleuchtungsflecks auf dem Lagergut und/oder der Lagereinrichtungen durch eine Scanbeleuchtung der bewegbaren ersten Scaneinrichtung eine Ausrichtung der ersten Scaneinrichtung auf dem Lagergut und/oder der Lagereinrichtungen sichtbar wird und der Beleuchtungsfleck durch die erste Bilderfassungseinrichtung miterfasst wird;
- wobei beim Verarbeiten des ersten und/oder zweiten Bildes der Beleuchtungsfleck sowie dessen Position miterkannt wird, und die erkannte Position des Beleuchtungsflecks zum Nachführen der ersten Scaneinrichtung genutzt wird.

### Ausführungsform 15:

Verfahren nach einem der Ausführungsformen 12 bis 14, weiterhin aufweisend:
- Erfassen eines zweiten Bildes eines Lagerguts und/oder der Lagereinrichtung durch eine zweite Bilderfassungseinrichtung der mobilen Vorrichtung;
- Verarbeiten des zweiten Bildes zur Erkennung, ob ein optisch-maschinenlesbarer Code am Lagergut und/oder an der Lagereinrichtung angebracht ist und nachfolgendes Ermitteln von zweiten positions-bezogenen Daten des am Lagergut und/oder an der Lagereinrichtung angebrachten optisch-maschinenlesbaren Codes;
- Übermitteln der zweiten positions-bezogenen Daten an eine bewegbare zweite Scaneinrichtung der mobilen Vorrichtung;
- Ausrichten der zweiten Scaneinrichtung auf den optisch-maschinenlesbaren Code; und
- Auslesen des optisch-maschinenlesbaren Codes durch die zweiten Scaneinrichtung.

Die Vorrichtung zum Inventarisieren von Lagerbeständen kann daher in mehreren Varianten realisiert werden.

Eine Variante basiert auf der oben beschriebenen Trennung in ein Bodenfahrzeug und eine mobile Flugvorrichtung, die beide miteinander kommunizieren können, wobei die mobile Flugvorrichtung durch das Bodenfahrzeug gesteuert wird. Diese räumliche Trennung in zwei separate Einheiten ermöglicht auch eine funktionale Trennung, wobei insbesondere die Positionsbestimmung, d. h. Orientierung und Navigation durch das Warenlager, durch das Bodenfahrzeug übernommen wird. Die Funktion der mobilen Flugvorrichtung ist es, das Lagergut bzw. die Lagereinrichtungen bildlich zu erfassen und einen Stream an Bildern an das Bodenfahrzeug zu übertragen. In Abhängigkeit von der Leistungsfähigkeit der verwendeten Hardware kann die mobile Flugvorrichtung eine teilweise oder auch vollständige Auswertung des bildlich erfassten Lagerguts bzw. der Lagereinrichtungen vornehmen, und vorhandene optisch-maschinenlesbare Codes erkennen und auslesen. Die Bildauswertung und Code-Erkennung kann aber auch durch das Bodenfahrzeug erfolgen, sodass die mobile Flugvorrichtung lediglich für die Erfassung der Bilder, oder das Scannen der optisch-maschinenlesbaren Codes, zuständig ist. Die so erfassten Bilder bzw. Codes werden zur weiteren Auswertung dann an das Bodenfahrzeug übertragen.

In einer weiteren Variante werden die oben beschriebenen Funktionen in einer einzigen mobilen Vorrichtung realisiert, bei der sich beispielsweise um eine mobile Flugvorrichtung oder eine tragbare Vorrichtung handeln kann, die beispielsweise auf einem Bodenfahrzeug, beispielsweise einem Gabelstapler, montierbar ist.

Zusätzliche bevorzugte Merkmale, Abwandlungen und Vorteile ergeben sich aus den abhängigen Ansprüchen, den Figuren und der folgenden Beschreibung.

### Kurzbeschreibung der Figuren

Nachfolgend soll die Erfindung anhand von in den Figuren gezeigten Ausführungsbeispielen erläutert werden. Die Komponenten in den Figuren sind nicht notwendigerweise maßstabsgerecht, und der Schwerpunkt wird vielmehr auf das Erläutern der Grundgedanken der Erfindung gelegt. Überdies bezeichnen in den Figuren gleiche Bezugszahlen entsprechende Teile. Soweit nicht technisch ausgeschlossen, können Ausführungsformen oder einzelne Elemente von Ausführungsformen geeignet kombiniert oder abgewandelt werden.
Figur 1 zeigt eine perspektivische Ansicht einer mobilen Vorrichtung zum Inventarisieren am Beispiel einer Drohne (Quadrokopter) gemäß einer Ausführungsform.
Figur 2 zeigt eine perspektivische Ansicht einer mobilen Vorrichtung zum Inventarisieren am Beispiel einer Drohne (Quadrokopter) gemäß einer weiteren Ausführungsform.
Figur 3 zeigt eine Seitenansicht der in Figur 2 dargestellten mobilen Vorrichtung.
Figur 4a und Figur 4b zeigen jeweils perspektivische Ansichten eines Moduls gemäß einer Ausführungsform.
Figur 5 illustriert einen Teil eines Verfahrens zum Inventarisieren von Lagerbeständen gemäß einer Ausführungsform.
Figur 6 zeigt schematisch ein von einer Bilderfassungseinrichtung aufgenommenes Bild.
Figur 7 illustriert schematisch einen Datenfluss einer mobilen Vorrichtung zum Inventarisieren gemäß einer weiteren Ausführungsform.
Figur 8 illustriert schematisch eine weitere Ausführungsform, welche ein Bodenfahrzeug und zum Bodenfahrzeug getrennte und von diesem gesteuerte mobile Flugvorrichtung umfasst.
Figur 9 zeigt eine dreidimensionale Darstellung eines Bodenfahrzeugs gemäß einer Ausführungsform.
Figuren 10A bis 10C zeigen Seitenansichten des in Figur 9 gezeigten Bodenfahrzeugs.
Figur 11 zeigt eine mobile Flugvorrichtung gemäß einer Ausführungsform.
Figur 12 veranschaulicht die Durchführung der Steuerung der mobilen Flugvorrichtung gemäß einer Ausführungsform.

### Detaillierte Beschreibung der Figuren

In der folgenden detaillierten Beschreibung wird auf die anliegenden Zeichnungen Bezug genommen, die Teil hiervon sind und in der zur Erläuterung spezifische Ausführungsformen dargestellt sind, in denen die Erfindung verwirklicht werden kann. Es sei bemerkt, dass auch andere Ausführungsformen verwendet werden können und dass strukturelle oder logische Änderungen vorgenommen werden können, ohne vom Schutzumfang der vorliegenden Erfindung abzuweichen. Die folgende detaillierte Beschreibung ist daher nicht als einschränkend anzusehen, und der Schutzumfang der vorliegenden Erfindung ist durch die anliegenden Ansprüche definiert. Die hier beschriebenen Ausführungsformen verwenden einen spezifischen Sprachgebrauch, der nicht als den Schutzumfang der anliegenden Ansprüche einschränkend ausgelegt werden sollte.

Der Begriff "optisch-maschinenlesbarer Code" umfasst alle maschinenlesbaren Codes, die basierend auf optischen Methoden dekodiert werden können, insbesondere Strichcodes, Quick Response (QR) Codes oder andere eindimensionale und/oder zweidimensionale Schwarz-Weiß Abbildungen von Strichen, Rechtecken, Quadraten oder ähnlichem. Der "optisch-maschinenlesbarer Code" kann dabei auf beliebige Art angebracht sein, insbesondere kann es sich um ein optisch-maschinenlesbares Etikett handeln oder der optisch-maschinenlesbarer Code kann aufgedruckt sein.

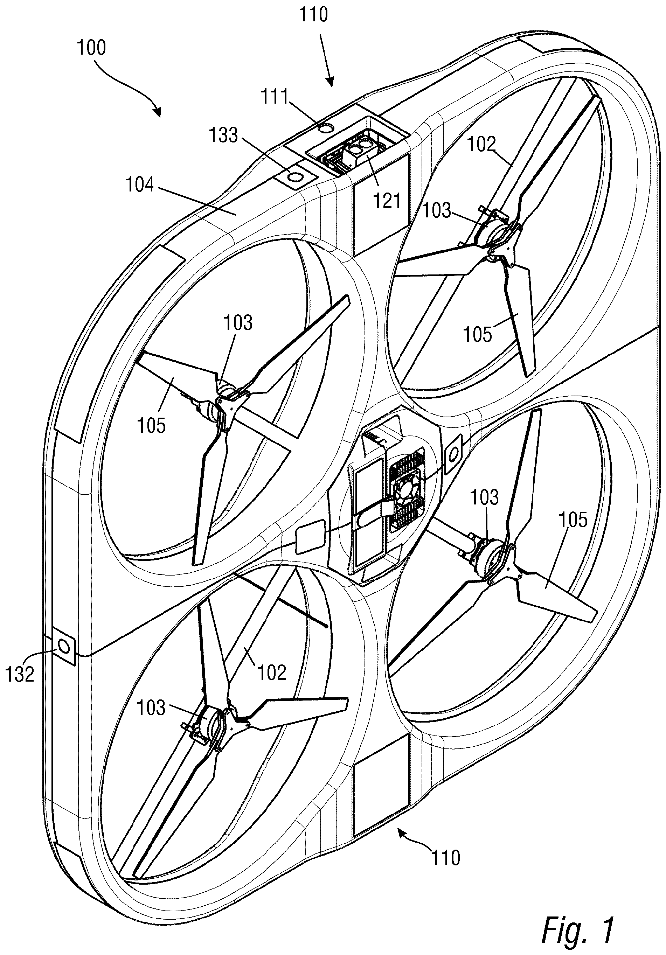

Figur 1 zeigt eine perspektivische Ansicht einer Vorrichtung 100 zum Inventarisieren gemäß einer Ausführungsform. Vorzugsweise handelt es sich bei der Vorrichtung um eine mobile Vorrichtung 100. Der Begriff "mobil" beschreibt dabei, dass die Vorrichtung entweder fahrbar oder auf einem Fahrzeug montierbar oder in irgendeiner Art transportabel ist. Bei der mobilen Vorrichtung 100 kann es sich um eine ferngesteuerte Drohne, eine autonome Drohne, ein bemanntes Fahrzeug, ein ferngesteuertes Fahrzeug, ein Flurförderzeug, ein Flurfördergerät, oder um ein autonomes Fahrzeug handeln. Im Folgenden werden Ausführungsformen beschrieben, bei dem es sich bei der Vorrichtung 100 zum Inventarisieren um eine Drohne, insbesondere um einen Quadrokopter, handelt (Figuren 1 bis 3), jedoch lassen sich alle im Folgenden erläuterten Grundgedanken der Erfindung auf andere Vorrichtungen 100 zum Inventarisieren übertragen.

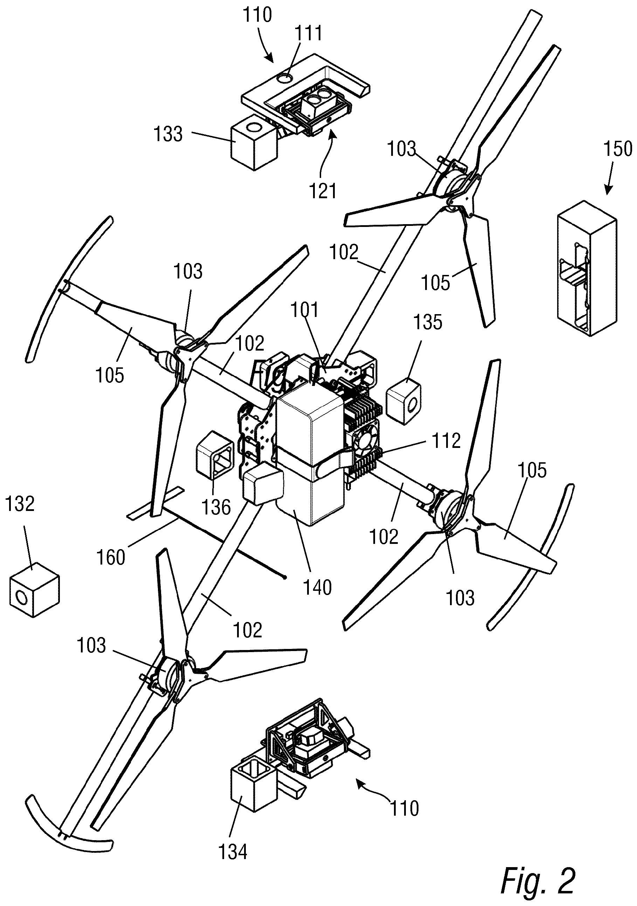

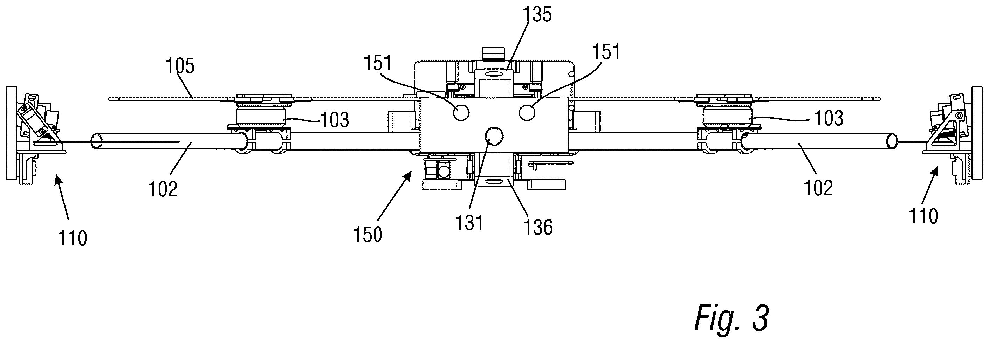

Gemäß einer Ausführungsform kann die Vorrichtung 100 ein Gehäuse 104 aufweisen, wie in Figur 1 dargestellt. Bei dem Gehäuse 104 der Vorrichtung 100 kann es sich um ein nicht-tragendes Merkmal handeln, wobei das Gehäuse einen Schaumstoff aufweisen kann, wie beispielsweise expandiertes Polypropylen (EPP). Vorteilhafterweise kann ein Gehäuse 104 als Kollisionsschutz und/oder als Halterung für ein oder mehrere Bauteile dienen. In manchen Ausführungsformen weist die Vorrichtung 100 kein Gehäuse auf, wie in Figuren 2 und 3 dargestellt.

Die Vorrichtung 100 kann einen Grundrahmen 101, einen oder mehrere Motorträger 102, einen oder mehrere Motoren 103, eine Stromversorgung 140 und optional eine Vielzahl Rotorblätter 105 aufweisen.

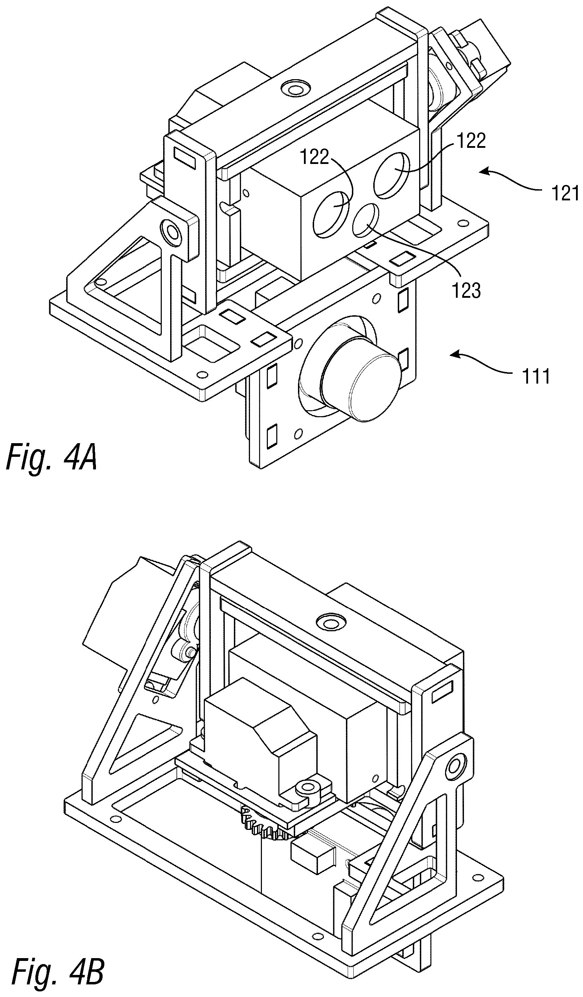

Weiterhin weist die Vorrichtung 100 eine erste Bilderfassungseinrichtung 111 zum bildlichen Erfassen von Lagergut 200 und/oder von Lagereinrichtungen 210 auf, wie in Figur 4 dargestellt. Die erste Bilderfassungseinrichtung 111 kann eine hochauflösende optische Kamera aufweisen, wobei die optische Kamera eine Ultra-Weitwinkel Optik aufweisen kann. Vorteilhafterweise ermöglicht eine Ultra-Weitwinkel Optik, insbesondere auch bei kurzen Distanzen zwischen der Vorrichtung 100 und Lagergut 200 und/oder von Lagereinrichtungen 210, das Erfassen einer großen Fläche. Die erste Bilderfassungseinrichtung 111 kann einen Bildsensor zum Erfassen von Bilddaten 240 aufweisen.

Die Vorrichtung 100 weist eine Auswerteeinrichtung 112 auf, wobei die erste Bilderfassungseinrichtung 111 mit der Auswerteeinrichtung 112 gekoppelt sein kann, insbesondere kann der Bildsensor mit der Auswerteeinrichtung 112 gekoppelt sein, um erfasste Bilddaten 240 auf die Auswerteeinrichtung 112 zu übertragen. Die Auswerteeinrichtung 112 kann einen leistungsstarken PC umfassen. Die Auswerteeinrichtung 112 kann eingerichtet sein um, insbesondere basierend auf den erfassten Bilddaten 240, das Vorhandensein eines am Lagergut 200 und/oder den an den Lagereinrichtungen 210 angebrachten optisch-maschinenlesbaren Codes 220 zu erkennen.

Gemäß einer Ausführungsform kann die Auswerteeinrichtung 112 ein Bildverarbeitungsmodul aufweisen, wobei das Bildverarbeitungsmodul die erfassten Bilddaten 240 nach typischen Merkmalen von optisch-maschinenlesbaren Codes absuchen kann, wobei das Bildverarbeitungsmodul basierend auf einem machine learning Algorithmus auf das Erkennen von typischen Merkmalen von optisch-maschinenlesbaren Codes trainiert sein kann. Bei Erkennen eines Vorhandenseins des optisch-maschinenlesbaren Codes 220 kann die Auswerteeinrichtung dem optisch-maschinenlesbaren Code 220 eine Identifikationsnummer (ID) zuordnen.

Weiterhin kann die Auswerteeinrichtung 112 basierend auf den erfassten Bilddaten 240 eine Position des erkannten optisch-maschinenlesbarer Codes ermitteln. Basierend auf dieser Position kann die Auswerteeinrichtung 112 positions-bezogene Daten des erkannten optisch-maschinenlesbaren Codes ausgeben.

Gemäß einer Ausführungsform weist die Vorrichtung mindestens eine Positionsbestimmungseinrichtung 150 auf. Die Positionsbestimmungseinrichtung 150 kann eine Kamera 151 aufweisen, bevorzugterweise eine Stereokamera 151. Die Positionsbestimmungseinrichtung 150 ermöglicht die Ermittlung der Position der Vorrichtung 100 relativ zu einem Markierungspunkt, der von einem Benutzer festgelegt sein kann. Die Positionsbestimmungseinrichtung 150 kann auch eine drahtlose Schnittstelle aufweisen, beispielsweise basierend auf WLAN oder RFID.

In einer bevorzugten Ausführungsform kann zur Angabe von positions-bezogenen Daten der Markierungspunkt als "Koordinatenursprung" verwendet. Bevorzugterweise können die positions-bezogenen Daten aus der, basierend auf den erfassten Bilddaten 240 ermittelten, Position des erkannten optisch-maschinenlesbaren Codes und der ermittelten Position der Vorrichtung 100 relativ zu dem Markierungspunkt berechnet werden. Alternativ, insbesondere falls der Markierungspunkt nicht vorhanden oder nicht erkennbar für die Positionsbestimmungseinrichtung 150 ist, können die positions-bezogenen Daten aus der, basierend auf den erfassten Bilddaten 240 ermittelten, Position des erkannten optisch-maschinenlesbaren Codes berechnet werden. Die erste Bilderfassungseinrichtung 111 kann somit die Zuordnung einer Identifikationsnummer und positions-bezogener Daten eines erkannten optisch-maschinenlesbaren Codes ermöglichen.

Gemäß einer Ausführungsform umfasst die Vorrichtung 100 weiterhin mindestens eine, relativ zur ersten Bilderfassungseinrichtung 111, bewegbare erste Scaneinrichtung 121 zum Auslesen des von der ersten Bilderfassungseinrichtung 111 erkannten optisch-maschinenlesbaren Codes 220, wie in Figur 4 dargestellt. Das Auslesen des optisch-maschinenlesbaren Codes 220 umfasst auch das Dekodieren des optisch-maschinenlesbaren Codes 220. Das Dekodieren des optisch-maschinenlesbaren Codes 220 kann durch die erste Bilderfassungseinrichtung 111 oder durch die Auswerteeinrichtung 112 oder durch eine weitere Verarbeitungseinrichtung erfolgen. Bevorzugterweise erfolgt die Dekodierung durch die erste Bilderfassungseinrichtung 111.

Gemäß einer Ausführungsform kann die erste Scaneinrichtung 121 folgendes umfassen: ein oder mehrere Bildbeleuchtungen 122, eine optische Scankamera 123, eine Halterung und ein oder mehrere Antriebe für die Scankamera 123. Die optische Scankamera 123 ermöglicht das Erfassen des optisch-maschinenlesbaren Codes 220. Die optische Scankamera 123 ist in der Halterung gehalten, wobei die Halterung mindestens ein Drehlager mit einem optionalen Dämpfungselement aufweist zur Drehung der optischen Scankamera 123 relativ um mindestens eine Achse. Durch die ein oder mehreren Antriebe für die optische Scankamera 123 ist eine Drehung um eine oder mehrere Achsen antreibbar und durch eine Steuereinrichtung 170 ansteuerbar. In einer bevorzugten Ausführungsform ermöglicht die Halterung der optischen Scankamera 123 eine Drehung um mindestens zwei Achsen. In einer noch bevorzugteren Ausführungsform entspricht die Halterung für die optische Scankamera 123 einer kardanischen Aufhängung, wobei die beiden Drehachsen der kardanischen Aufhängung jeweils von einem separaten Antrieb antreibbar und unabhängig voneinander durch die Steuereinrichtung 170 ansteuerbar sind. In einer bevorzugten Ausführungsform kann die kardanische Aufhängung in einer Pan Achse um bis zu +/- 40° und in einer Tilt-Achse um bis zu +/- 85° gedreht werden. Gemäß einer Ausführungsform entsprechen die ein oder mehreren Antriebe Servo-Motoren. Die erste Bilderfassungseinrichtung 111 kann durch die Halterung für die erste Scaneinrichtung 121 gehaltert sein, wobei die erste Bilderfassungseinrichtung bevorzugt starr mit der Halterung verbunden ist. Die erste Scaneinrichtung 121, insbesondere die optische Scankamera 123, kann einen kleineren optischen Öffnungswinkel definieren als die erste Bilderfassungseinrichtung 111. Bevorzugterweise entspricht die optische Scankamera 123 einem Barcodescanner.

Gemäß einer weiteren Ausführungsform weist die erste Scaneinrichtung 121 ein oder mehrere Bildbeleuchtungen 122 auf, die zusammen mit der Scankamera 123 in der Halterung gehalten werden und zusammen mit der Scankamera 123 bewegbar sind. Die ein oder mehreren Bildbeleuchtungen 122 ermöglichen ein Beleuchtungsfleck auf dem Lagergut 200 und/oder der Lagereinrichtung 220 zu erzeugen. In manchen Ausführungsformen kann das Bildverarbeitungsmodul der Auswerteeinrichtung 112 die erfassten Bilddaten 240 nach typischen Merkmalen von Beleuchtungsflecken absuchen, wobei das Bildverarbeitungsmodul basierend auf dem machine learning Algorithmus auf das Erkennen von typischen Merkmalen von Beleuchtungsflecken trainiert sein kann. Bei Erkennen des Vorhandenseins des Beleuchtungsflecks kann die Auswerteeinrichtung die Position des Beleuchtungsflecks ermitteln.

Gemäß einer Ausführungsform ermöglicht die Steuereinrichtung 170 das Steuern einer oder mehrerer Scaneinrichtungen 121, insbesondere ermöglicht die Steuereinrichtung 170 die Drehung einer oder mehrerer optischer Scankameras 123. Bevorzugt ist die Steuereinrichtung 170 ein 32-Bit Mikrocontroller. Die Auswerteeinrichtung 112 und die Steuereinrichtung 170 können miteinander zur Übertragung der positions-bezogenen Daten des optisch-maschinenlesbaren Codes 220 von der Auswertungseinrichtung 112 auf die Steuereinrichtung 170 gekoppelt sein, um die Ausrichtung der ersten Scaneinrichtung 121 auf den optisch-maschinenlesbaren Code 220 zum Auslesen des optisch-maschinenlesbaren Codes 220 zu steuern. Die positions-bezogenen Daten des optisch-maschinenlesbaren Codes 220 stehen in Relation zu Drehwinkeln der jeweiligen Drehachsen mit denen die Ausrichtung der ersten Scaneinrichtung 121 auf den optisch-maschinenlesbaren Code 220 erreicht werden kann.

In einigen Ausführungsformen kann die Zuverlässigkeit der Ausrichtung der ersten Scaneinrichtung 121 auf den optisch-maschinenlesbaren Code 220 verbessert werden durch eine Kalibration (Kalibrierung). Eine Aufnahme der ersten Scaneinrichtung 121 kann zeitlich verzögert zu einer Aufnahme der ersten Bilderfassungseinrichtung 111 stattfinden, wodurch insbesondere bei einer sich in Bewegung befindlichen Vorrichtung 100 zum Zeitpunkt der Aufnahme der ersten Scaneinrichtung 121 die relative Position zwischen der Vorrichtung 100 und dem erkannten optisch-maschinenlesbaren Code 220 abweichend von der ermittelten Position des erkannten optisch-maschinenlesbaren Codes 220 sein kann. Die Kalibration kann erfolgen basierend auf mehreren Datensätzen der ermittelten Position der Beleuchtungsflecken und/oder indem der machine learning Algorithmus der Auswerteeinrichtung 112 basierend auf mehreren Datensätzen der ermittelten Position von optisch-maschinenlesbarer Codes und/oder von Beleuchtungsflecken trainiert wird.

Insbesondere ist denkbar - unabhängig von den beschriebenen Ausführungsbeispielen -, dass eine Berücksichtigung einer Geschwindigkeit einer sich bewegenden Vorrichtung erfolgt, insbesondere das die große Ausrichtung der ersten Scaneinrichtung unter Einbeziehung der Geschwindigkeit der Vorrichtung durchgeführt wird.

Weiterhin kann die Vorrichtung 100 eine oder mehrere Abstandssensoren aufweisen 131, 132, 133, 134, 135, 136, insbesondere mindestens zwei in unterschiedliche Richtungen ausgerichtete Abstandssensoren 131, 132, 133, 134, 135, 136, die mit der Steuereinrichtung 170 der Vorrichtung 100 gekoppelt sind. Bevorzugterweise sind die Abstandssensoren Ultraschallsensoren.

Die Vorrichtung 100 kann eine drahtlose Schnittstelle 160 zur Datenkommunikation der Vorrichtung 100 mit einer zentralen Rechnereinheit aufweisen. Beispielsweise kann die drahtlose Schnittstelle 160 eine WLAN Verbindung sein. Vorteilhafterweise können hierdurch die Identifikationsnummer, die positions-bezogenen Daten des optisch-maschinenlesbaren Codes und der ausgelesene optisch-maschinenlesbare Code an eine zentrale Rechnereinheit übermittelt werden.

Die Vorrichtung 100 kann ebenfalls einen oder mehrere Sensoren aufweisen zum Erkennen und Auslesen von nicht-optischen maschinenlesbaren Codes. Insbesondere kann die Vorrichtung 100 ein RFID-Lesegerät aufweisen.

Die Vorrichtung 100 kann auch weitere Sensoren aufweisen, insbesondere zum Erfassen von Umgebungsbedingungen, wie beispielsweise ein Temperatursensor und/oder ein Luftfeuchtigkeitssensor und/oder ein Photodetektor und/oder ein Lichtsensor.

In einer besonders bevorzugten Ausführungsform weist die Vorrichtung 100 weiterhin eine zweite Bilderfassungseinrichtung 111 und eine zweite bewegbare Scaneinrichtung 121 auf, wobei die erste Bilderfassungseinrichtung 111 und die erste bewegbare Scaneinrichtung 121 ein erstes Modul 110 auf einer ersten Seite der Vorrichtung 100 bilden und die zweite Bilderfassungseinrichtung 111 und die zweite bewegbare Scaneinrichtung 121 ein zweites Modul 110 auf einer der ersten Seite gegenüberliegenden zweiten Seite der Vorrichtung 100 bilden. Diese Ausführungsform ist besonders vorteilhaft, da die Vorrichtung 100 mit zwei Modulen 110 das Inventarisieren von Lagerbeständen Lager gleichzeitig auf zwei Regalseiten ermöglicht. Die zweite Bilderfassungseinrichtung 111 kann baugleich zu der ersten Bilderfassungseinrichtung 111 sein und/oder die zweite bewegbare Scaneinrichtung 121 kann baugleich zu der ersten bewegbare Scaneinrichtung 121 sein.

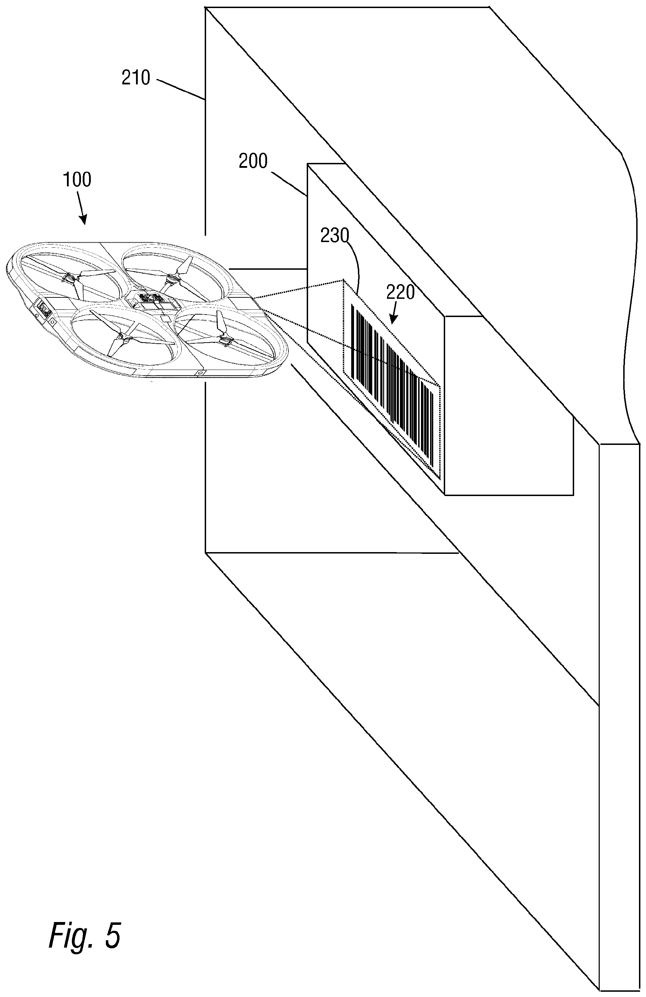

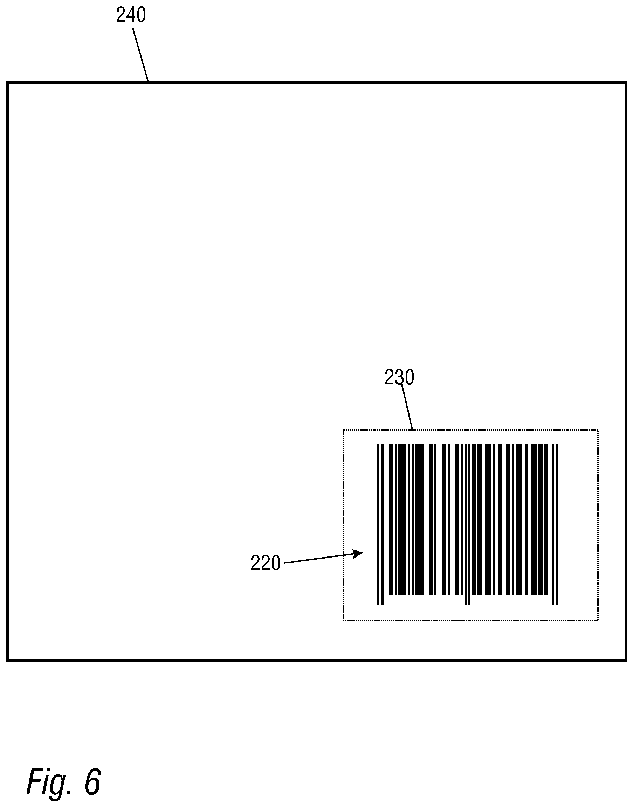

Weiterhin umfasst die vorliegende Offenbarung Verfahren zum Inventarisierend von Lagerbeständen. In einer Ausführungsform weist ein Verfahren zum Inventarisieren auf: Bewegen einer mobilen Vorrichtung 100, insbesondere einer mobilen Vorrichtung 100 gemäß einer der vorhergehend offenbarten Ausführungsformen, entlang von Lagergut 200 und/oder einer Lagereinrichtung 210, wie beispielsweise in Figur 5 anhand eines an Lagergut 200 angebrachten optisch-maschinenlesbaren Codes 220 illustriert ist. Weiterhin umfasst das Verfahren ein Erfassen eines ersten Bildes 240 vom Lagergut 200 und/oder der Lagereinrichtung 210 durch eine erste Bilderfassungseinrichtung 111 der mobilen Vorrichtung 100, wie in Figur 6 illustriert.

Ferner umfasst das Verfahren: ein Verarbeiten des ersten Bildes 240 zur Erkennung, ob ein optisch-maschinenlesbarer Code 220 am Lagergut 200 und/oder an der Lagereinrichtung 210 angebracht ist und nachfolgendes Ermitteln von ersten positions-bezogenen Daten des am Lagergut 200 und/oder an der Lagereinrichtung 210 angebrachten optisch-maschinenlesbaren Codes 220; und ein Übermitteln der ersten positions-bezogenen Daten an eine bewegbare erste Scaneinrichtung 121 der mobilen Vorrichtung 100.

Das Verfahren umfasst ein Ausrichten der ersten Scaneinrichtung 121 auf den optisch-maschinenlesbaren Code 220; und ein Auslesen des optisch-maschinenlesbaren Codes 220 durch die erste Scaneinrichtung 121.

Weiterhin kann das Verfahren umfassen: ein Erfassen, während die mobile Vorrichtung 100 weiterbewegt wird, eines zweiten Bildes 240 des Lagerguts 200 und/oder der Lagereinrichtungen 210 durch die erste Bilderfassungseinrichtung 111, 112; und Verarbeiten des zweiten Bildes 240 zur Erkennung des optisch-maschinenlesbaren Codes 220 und nachfolgendes Ermitteln von zweiten positions-bezogenen Daten des am Lagergut 200 und/oder an den Lagereinrichtungen 210 angebrachten optisch-maschinenlesbaren Codes 220. Vorteilhafterweise kann eine Zuordnung einer Identifikationsnummer und/oder positions-bezogener Daten eines im ersten Bildes 240 erkannten ersten optisch-maschinenlesbaren Codes ermöglichen, dass bei einem im zweiten Bild 240 erkannten zweiten optisch-maschinenlesbaren Codes durch eine Zuordnung einer Identifikationsnummer und/oder positions-bezogener Daten ermittelt werden kann ob der zweite optisch-maschinenlesbare Code gleich oder ungleich dem ersten optisch-maschinenlesbare Code ist.

In einer Ausführungsform kann das Verfahren umfassen: ein Übermitteln der zweiten positions-bezogenen Daten an die bewegbare erste Scaneinrichtung 121 der mobilen Vorrichtung 100; und ein Ausrichten der ersten Scaneinrichtung 121 auf den optisch-maschinenlesbaren Code 220; und erneutes Auslesen des optisch-maschinenlesbaren Codes 220 durch die erste Scaneinrichtung 121. Das erneute Auslesen kann insbesondere erfolgen falls das vorhergehende Auslesen des optisch-maschinenlesbaren Codes 220 durch die erste Scaneinrichtung 121 nicht zu einem Auslesen und/oder einer Dekodierung des optisch-maschinenlesbaren Codes 220 führte. Das Verfahren kann das Erfassen weiterer Bilder 240 und erneutes Auslesen durch die bewegbare erste Scaneinrichtung 121 umfassen bis der optisch-maschinenlesbaren Codes 220 durch die erste Scaneinrichtung dekodiert ist.

Falls die erste Scaneinrichtung 121 eine oder mehrere Scanbeleuchtungen 122 aufweist, können die eine oder mehrere Scanbeleuchtungen 122 durch eine Ausrichtung der ersten Scaneinrichtung 121 auf dem Lagergut 200 und/oder der Lagereinrichtung 210 einen Lichtkegel 230 erzeugen wie in Figur 5 und Figur 6 dargestellt, wobei ein Beleuchtungsfleck auf dem Lagergut 200 und/oder der Lagereinrichtung 210 erzeugt werden kann. Der Beleuchtungsfleck kann durch die erste Bilderfassungseinrichtung 111 miterfasst werden, wobei beim Verarbeiten des ersten oder zweiten Bildes der Beleuchtungsfleck sowie dessen Position miterkannt wird, und die erkannte Position des Beleuchtungsflecks zum Nachführen der ersten Scaneinrichtung 121 genutzt wird. Vorteilhafterweise kann hierdurch die Genauigkeit der Ausrichtung der ersten Scaneinrichtung 121 auf das am Lagergut 200 und/oder an der Lagereinrichtung 210 angebrachten optisch-maschinenlesbaren Codes 220 verbessert werden.

Gemäß einer Ausführungsform kann das Verfahren aufweisen: Erfassen eines zweiten Bildes 240 vom Lagergut 200 und/oder der Lagereinrichtung 210 durch eine zweite Bilderfassungseinrichtung 111 der mobilen Vorrichtung 100; Verarbeiten des zweiten Bildes 240 zur Erkennung, ob ein optisch-maschinenlesbarer Code 220 am Lagergut 200 und/oder an der Lagereinrichtung 210 angebracht ist und nachfolgendes Ermitteln von zweiten positions-bezogenen Daten des am Lagergut 200 und/oder an der Lagereinrichtung 210 angebrachten optisch-maschinenlesbaren Codes 220; Übermitteln der zweiten positions-bezogenen Daten an eine bewegbare zweite Scaneinrichtung 121 der mobilen Vorrichtung 100; Ausrichten der zweiten Scaneinrichtung 121 auf den optisch-maschinenlesbaren Code 220; und Auslesen des optisch-maschinenlesbaren Codes 220 durch die zweiten Scaneinrichtung 121.

Gemäß einer Ausführungsform kann das Verfahren aufweisen: Übermittlung der Identifikationsnummer, der positions-bezogenen Daten des optisch-maschinenlesbaren Codes und der ausgelesene optisch-maschinenlesbare Code an eine zentrale Rechnereinheit, bevorzugterweise mittels einer drahtlose Schnittstelle 160 zur Datenkommunikation.

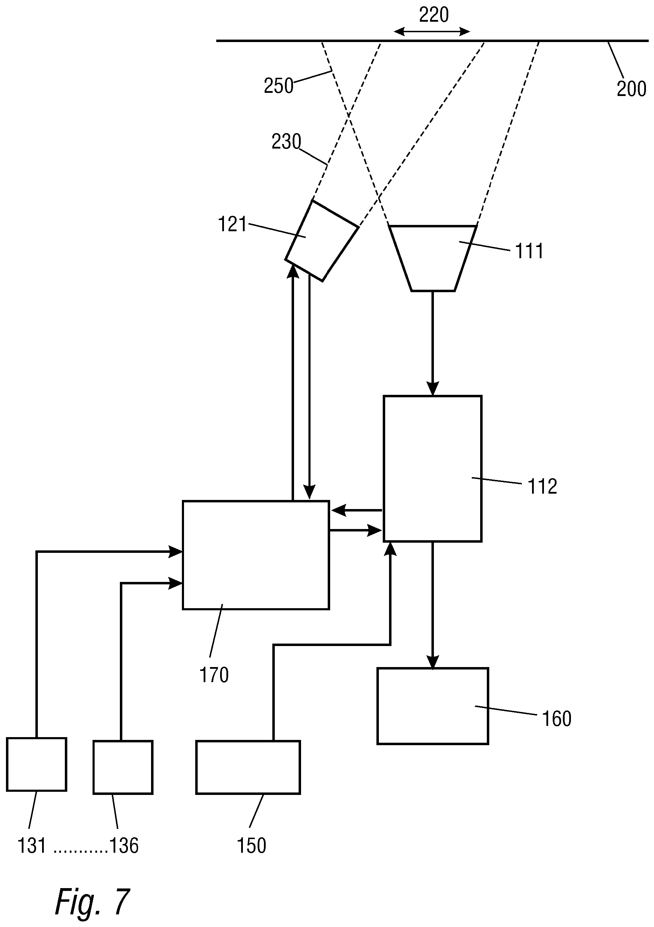

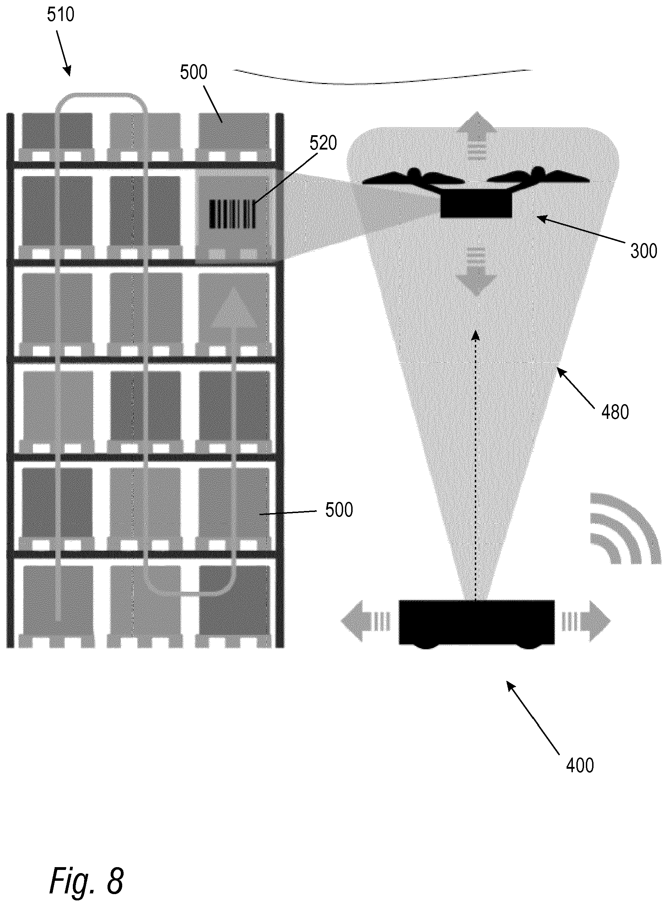

Mit Bezug auf die Figuren 8 bis 12 werden weitere Ausführungsformen beschrieben. Im Gegensatz zu den vorstehend beschriebenen Ausführungsformen ist bei den in den Figuren 8 bis 12 gezeigten Ausführungsformen die mobile Vorrichtung in ein Bodenfahrzeug 400 und eine dazu separate mobile Flugvorrichtung 300 unterteilt. Bei der mobilen Flugvorrichtung 300 kann es sich insbesondere um einen Flugroboter, beispielsweise eine Drohne handeln. Diese kann grundsätzlich wie die bereits zuvor beschriebene Drohne (Quadrokopter: Figuren 1 bis 7) aufgebaut sein. Da jedoch ein Teil der Funktionalität, die in der in den Figuren 1 bis 7 gezeigten mobilen Vorrichtung enthalten ist, vom Bodenfahrzeug 400 übernommen wird, muss die mobile Flugvorrichtung 300 beispielsweise nicht über eine eigene Positionsbestimmungseinrichtung und eine eigene Bildverarbeitung verfügen, wodurch Gewicht eingespart und die Komplexität verringert wird. Außerdem ist es möglich, kommerziell erhältliche mobile Flugvorrichtungen, beispielsweise Quadrokopter, zu verwenden, ohne dass diese Hardware-technisch aufwändig angepasst werden müssen.

Figur 8 zeigt das Grundprinzip dieser Ausführungsformen. Das Bodenfahrzeug 400, welches als autonomes Bodenfahrzeug oder fahrerloses Transportfahrzeug (Englisch: Autonomous Ground Vehicle, AGV) bezeichnet werden kann, navigiert autonom durch das Warenlager, beispielsweise entlang von Lagereinrichtungen 510, in denen hier beispielhaft verschiedene Pakete 500 gelagert sind, welche hier das Lagergut darstellen. Die Pakete 500 sind jeweils mit einem optisch-maschinenlesbaren Code (optisch-maschinenlesbares Etikett) beklebt, oder der Code ist aufgedruckt.

Das Bodenfahrzeug 400 ist damit ein flurgebundenes Fördermittel mit einem eigenen Fahrantrieb, dass automatisch gesteuert und typischerweise berührungslos durch das Warenlager geführt wird. Spezielle Schienen, auf denen das Bodenfahrzeug 400 zwangsgeführt wird, sind nicht erforderlich. Da auf fest installierte Infrastruktur zur Zwangsführung des Bodenfahrzeugs 400 verzichtet werden kann, lässt sich die mobile Vorrichtung aus Bodenfahrzeug 400 und mobile Flugvorrichtung 300 vergleichsweise unkompliziert in beliebiger Umgebung einsetzen. Voraussetzung ist lediglich, dass der Fußboden eine Bewegung des Bodenfahrzeugs 400 ermöglicht.

Es ist jedoch auch möglich, dass zusätzlich bestimmte Infrastruktur im Warenlager vorgesehen ist, um dem Bodenfahrzeug 400 die Navigation zu erleichtern. Das können beispielsweise festinstallierte Referenzpunkte sein, welche durch das Umgebungssensorsystem des Bodenfahrzeugs 400 sicher erkannt werden. Zusätzlich oder alternativ können im Boden des Warenlagers an bestimmten Positionen Sensoren, beispielsweise Induktionsschleifen, installiert werden, welche bei Überfahren durch das Bodenfahrzeug 400 das Erkennen dieser Position durch das Umgebungssensorsystems des Bodenfahrzeugs 400 erleichtern.

Für die Navigation durch das Lager kann das Bodenfahrzeug 400 beispielsweise mit einem Laserscannersystem (z.B.LIDAR) und einer Rad-Odometrie ausgestattet sein. Diese bilden zusammen, gegebenenfalls mit weiteren Sensoren, das Umgebungssensorsystem des Bodenfahrzeugs 400. Mithilfe des Laserscannersystems erfasst das Bodenfahrzeug 400 permanent seine Umgebung durch Abtastung mittels eines, zwei oder drei Laserstrahlen, die vom Laserscannersystem ausgesendet werden. Die dabei gewonnenen Daten können entweder zur Erstellung einer eigenen Umgebungskarte verwendet oder mit einer im Bodenfahrzeug 400 abgespeicherten Karte verglichen werden. Insbesondere aus dem letztgenannten Vergleich kann das Bodenfahrzeug 400 auf seine eigene Position in einem bezüglich des Warenlagers festgelegten Bezugssystem (Weltkoordinatensystem) schließen. Das Erstellen einer eigenen Umgebungskarte bei gleichzeitiger Bestimmung der eigenen Position ist auch unter dem Begriff simultane Positionsbestimmung und Kartenerstellung (englisch: simultaneous Localization and Mapping; SLAM) bekannt. Auch hierfür steht Standardsoftware zur Verfügung die geeignet angepasst und genutzt werden kann.

Mittels der Rad-Odometrie kann das Bodenfahrzeug 400 unabhängig von dem Laserscannersystem den zurückgelegten Weg überwachen. Hierzu dienen Drehwinkelaufnehmer und Drehzahlaufnehmer, welche die Drehstellung und Drehung von beispielsweise angetriebenen Rädern des Bodenfahrzeugs 400 dauerhaft überwachen und entsprechende Daten an eine Steuereinheit des Bodenfahrzeugs 400 übermitteln.

Zur Orientierung des Bodenfahrzeugs wird typischerweise permanent eine Karte erstellt und mit den bisherigen Kartendaten verglichen und diese ggf. aktualisiert. Dadurch kann das Bodenfahrzeug sicher seine Position bestimmen und aktualisiert gleichzeitig die gespeicherten Umgebungsinformationen.

Die mobile Flugvorrichtung 300 wird so durch das Bodenfahrzeug 400 gesteuert, dass es sich dauerhaft innerhalb eines vorgegebenen Bereichs 480 aufhält. Die Bereich 480 kann beispielsweise dem Raumwinkelbereich entsprechen, der durch die hier nicht dargestellte Kameraoptik definiert ist. Der Bereich 180 weitet sich aufgrund des Öffnungswinkel der Optik ausgehend vom Bodenfahrzeug 400 nach oben hin zunehmend auf, sodass die mobile Flugvorrichtung 300 auch bei zunehmender lateraler Entfernung von beispielsweise der optischen Achse der Kameraoptik immer noch im Sichtfeld der Kameraoptik bleibt. Dadurch werden größere Spielräume bei der Steuerung der mobilen Flugvorrichtung 300 eröffnet.

Das Bodenfahrzeug 400 bewegt sich somit auf einer zweidimensionalen Raumebene und gibt dabei der mobilen Flugvorrichtung 300 eine Position auf dieser Raumebene vor, da die mobile Flugvorrichtung 300 über eine Regelschleife permanent oberhalb des Bodenfahrzeugs 400 gehalten wird.

Für diese Regelschleife wird die mobile Flugvorrichtung 300 kontinuierlich durch das Bilderfassungssystem des Bodenfahrzeugs 400 verfolgt (tracking). Abweichungen der mobilen Flugvorrichtung 300 in X-Richtung und Y-Richtung von dem durch das Bodenfahrzeug 400 definierten Referenzpunkt führen zu einer Gegensteuerung der mobilen 300 durch das Bodenfahrzeug 400, sodass die mobile Flugvorrichtung 300 praktisch dauerhaft oberhalb des Bodenfahrzeugs 400, konkreter oberhalb eines Referenz- oder Bezugspunkt, schwebt. In vertikaler Richtung, d. h. in Z-Richtung, wird die mobile Flugvorrichtung 300 ebenfalls durch das Bilderfassungssystem des Bodenfahrzeugs 400 verfolgt und die Flughöhe entsprechend nachgesteuert, sollte sie nicht mit den durch das Bodenfahrzeug 100 vorgegebenen Flugdaten übereinstimmen. Darüber hinaus kann auch die Orientierung der mobilen Flugvorrichtung 300, insbesondere eine Drehung um eine vertikale Achse, durch das Bilderfassungssystem erkannt und durch Steuerbefehle entsprechend ausgeglichen werden, bzw. die mobile Flugvorrichtung 300 entsprechend gedreht werden.

Gemäß einer Ausführungsform kann die Regelschleife eine separate Positionsregelung und Geschwindigkeitsregelung umfassen, oder eine kombinierte Positionsund Geschwindigkeitsregelung. Die Position der mobilen Flugvorrichtung 300 wird dabei immer relativ zu einem sich mit dem Bodenfahrzeug 400 mit bewegenden Bezugssystem geregelt. Konkret kann beispielsweise die optische Achse des Bilderfassungssystems des Bodenfahrzeugs 400 die Z-Achse des Bezugssystems definieren. Die X- und Y-Achse liegen dann in einer zur optischen Achse des Bilderfassungssystems senkrechten Ebene. Als SOLL-Position (SOLL-Punkt) kann beispielsweise die Position X=0 und Y=0 definiert werden. Die Regelung der mobilen Flugvorrichtung 300 erfolgt dann so, dass sie sich stets an der SOLL-Position (X=0; Y=0) befindet. Bei Bedarf kann eine SOLL-Position außerhalb von X=0 und Y=0 definiert oder dynamisch zwischen verschiedenen SOLL-Positionen umgeschaltet werden. Dabei ist darauf zu achten, dass die mobile Flugvorrichtung 300 stets in dem Raumwinkelbereich verbleibt, welcher durch die Optik des Bilderfassungssystems definiert ist, damit sie sicher vom Bilderfassungssystem des Bodenfahrzeugs verfolgt werden kann.

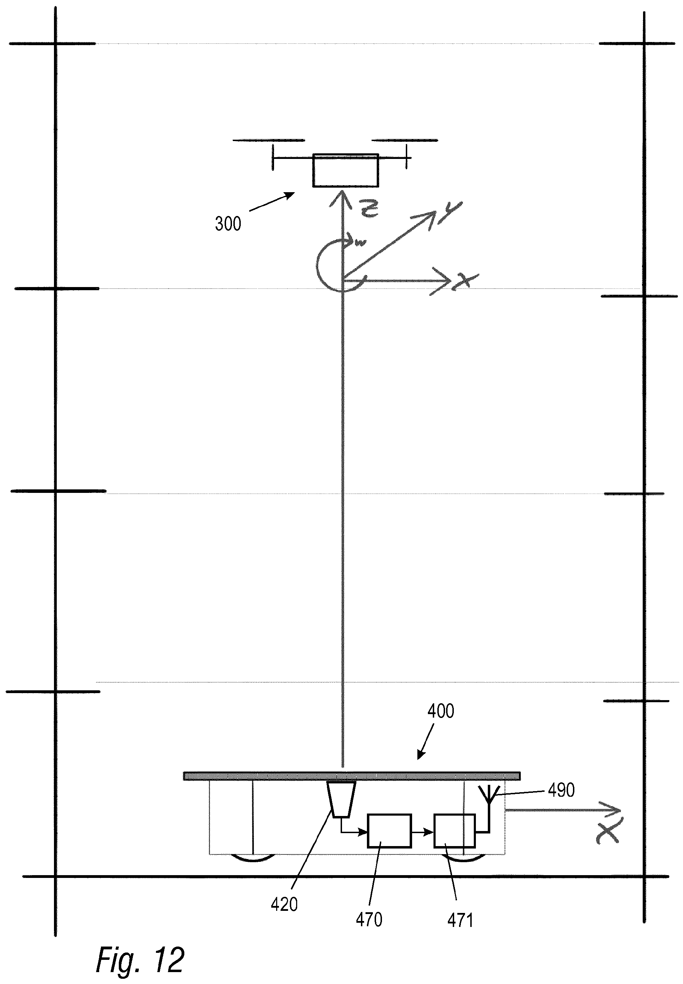

Insgesamt wird die mobile Flugvorrichtung 300 so gesteuert, dass regeltechnisch die Position in X-Richtung, Y-Richtung und Z-Richtung sowie die Orientierung bzw. Ausrichtung, die mit W bezeichnet wird, überwacht und geeignet gesteuert werden. Dies ist in Figur 12 beispielhaft dargestellt.

Das Bilderfassungssystem 420 des Bodenfahrzeugs 400 erfasst die Lade und Position der mobilen Flugvorrichtung 300. In der zentralen Steuereinheit 470 des Bodenfahrzeugs, welche ein leistungsfähiges Computersystem umfasst, erfolgt die Bildauswertung und die Ermittlung der Steuerbefehle, typischerweise Steuerbefehle zur Steuerung von Roll und Pitch um die Geschwindigkeit und die Flugrichtung zu regeln, welche dann durch die zweite Sende- und Empfangsvorrichtung 471 und die drahtlose Schnittstelle (Antenne) des Bodenfahrzeugs 400 an die mobile Flugvorrichtung übertragen werden.

Sollte die Kommunikation zwischen Bodenfahrzeug 400 und mobiler Flugvorrichtung 300 unterbrochen sein, erfolgt durch ein in der mobilen Flugvorrichtung 300 gespeichertes Notprogramm ein kontrolliertes Landen der mobilen Flugvorrichtung.

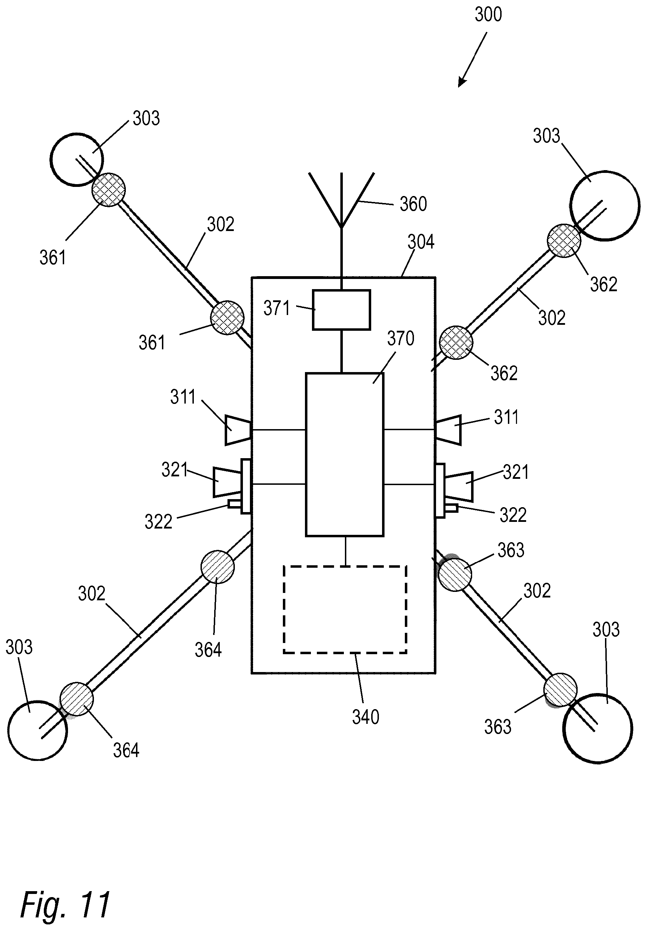

Zur sicheren Nachverfolgung der mobilen Flugvorrichtung 300 durch das Bilderfassungssystem des Bodenfahrzeugs 400 können beispielsweise die durch das Bilderfassungssystem kontinuierlich aufgenommenen Bilder geeignet gefiltert und Strukturen geclustert werden. Als hilfreich hat sich herausgestellt, wenn die mobile Flugvorrichtung 300 über eine geeignete optische Signaleinrichtung verfügt, welche eine genaue Identifizierung der Position und Lage der mobilen Flugvorrichtung 300 durch das Bilderfassungssystem 420 und die Steuereinheit 420 des Bodenfahrzeugs 400 ermöglicht. Konkret soll dies anhand der Figur 11 erläutert werden, welche eine mobile Flugvorrichtung 300 aus Sicht des Bodenfahrzeugs 400 darstellt.

Die mobile Flugvorrichtung 300 kann beispielsweise eine Flugdrohne sein, die ein Gehäuse 304 und vier winklich zueinander angeordnete Motorträger oder Arme 302 aufweist. Typischerweise sind die Arme 302 rechtwinklig zueinander angeordnet. Grundsätzlich kann die Flugdrohne einen Aufbau wie in der Figur 2 gezeigt aufweisen. Am Ende eines jeden Arms 302 ist ein Motor mit jeweils einem Rotor 303 angebracht. An jedem Arm 302 sind weiterhin beabstandet zueinander jeweils zwei optische Signalquellen 361,362, 363, 364 befestigt. Diese strahlen nach unten, d. h. in Richtung zum Bodenfahrzeug 400. Zusammen bilden die optischen Signalquellen 361,362, 363, 364 ein definiertes Muster, was leicht durch das Bilderfassungssystem des Bodenfahrzeugs 400 erkannt werden kann. Typischerweise werden die optischen Signalquellen durch LEDs realisiert.

Bei der in Figur 11 gezeigten Ausführungsform strahlen die Signalquellen 361 und 362, welche an den beiden in Figur 11 oberen Armen 302 befestigt sind, beispielsweise rot. Die am nach links unten weisenden Arm 302 befestigten Signalquellen 364 strahlen dagegen grün, und die am nach unten rechts weisenden Arm 302 befestigten Signalquellen 363 strahlen dagegen blau. Da es sich hier um die drei Grundfarben handelt, können diese leicht durch Filtern der Farbräume bei der Auswertung durch das Bilderfassungssystems voneinander getrennt werden. Dadurch können auch schwierige Beleuchtungssituationen, beispielsweise Gegenlichtsituationen, sicher beherrscht werden. Außerdem ist es möglich, dass die mobile Flugvorrichtung 300 in vollständiger Dunkelheit sicher navigiert werden kann. Dies hat den Vorteil, dass die Vorrichtung zum Inventarisieren auch außerhalb von Arbeitszeiten oder Schichten eingesetzt werden kann, wenn in diesen Zeiträumen die Beleuchtung im Warenlager vermindert oder auf eine Nachbeleuchtung umgeschaltet ist.

Durch Verwendung von Signalquellen mit unterschiedlicher Farbe können nach erfolgter Filterung der Farbräume die einzelnen Arme einfach geclustert und dadurch auch der Mittelpunkt der mobilen Flugvorrichtung 300 bestimmt werden. Der Mittelpunkt ergibt sich aus dem Schnittpunkt zwischen den gedachten Linien, die entlang jedes Arms 302, identifizierbar durch die an jedem Arm angebrachten Signalquellen, verlaufen.

Da der reale Abstand der einzelnen Signalquellen 361,362, 363, 364 untereinander und von dem Mittelpunkt der mobilen Flugvorrichtung 300 bekannt ist, kann nach erfolgter Bestimmung des Mittelpunkts der mobilen Flugvorrichtung 300 und dessen Markierung in den erfassten Bildern auch die Position in Z-Richtung ermittelt werden. Je weiter weg die mobile Flugvorrichtung 300 von dem Bodenfahrzeug 400 ist, desto kleiner ist der Abstand der Signalquellen 361,362, 363, 364 in dem erfassten Bild. Aufgrund der unterschiedlichen Farbe der Signalquellen 361,362, 363, 364 ist doch eine eindeutige Zuordnung der Orientierung (Drehung um vertikale Z-Achse) möglich, sodass eine vollständige Positionsbestimmung (X, Y, Z, W) der mobilen Flugvorrichtung 300 erfolgt.

Weicht nun die so ermittelte Position in einem oder allen der Parameter X, Y, Z, W ab, erfolgt über die beschriebene Regelschleife eine Steuerung der mobilen Flugvorrichtung 300, sodass diese wieder die vorgegebene SOLL-Position einen.

Die Steuerung der mobilen Flugvorrichtung 300 durch das Bodenfahrzeug 400 erfolgt kontinuierlich und läuft zyklisch mit den Schritten Erkennen der Position (IST-Position) der mobilen Flugvorrichtung 300 mittels des Bilderfassungssystems (Kamera und Software), Berechnung einer eventuellen Abweichung der IST-Position von einer SOLL-Position, Berechnung von neuen Steuerparametern (Steuerbefehle), bei denen es sich im Fall einer Drohne spezifisch um Roll, Pitch, Throttle, Heading handeln kann, und übermitteln dieser Steuerparameter bzw. Steuerbefehle an die mobile Flugvorrichtung 300.

Typischerweise wird für die Positionsregelung die Geschwindigkeit und Richtung der mobilen Flugvorrichtung über die Steuerung von Roll (Rollwinkel) und Pitch (Nickwinkel) kontrolliert. Das Heading wird für die Einstellung der Orientierung verwendet, während über Throttle die Flughöhe eingestellt wird.

Zum Erfassen von Lagergut 500 kann das Bodenfahrzeug 400 beispielsweise schrittweise das Regal 510 abfahren und nach jeder schrittweisen Weiterfahrt an einer Position bleiben, damit die mobile Flugvorrichtung 300 durch eine gesteuerte vertikale Bewegung sämtliche Pakete 510 abfliegen kann. Dadurch werden kontinuierlich Bilder von den Paketen 500 durch die Bilderfassungseinrichtung der mobilen Flugvorrichtung 300, welche nachfolgend erläutert wird, aufgenommen. Diese Bilder werden analysiert und ausgewertet, ob und wo sich ein optisch-maschinenlesbarer Code 520 befindet. Wird ein solcher erkannt, kann beispielsweise der entsprechende Bildausschnitt, in dem der optisch-maschinenlesbare Code 520 liegt, ausgelesen und geeignet dekodiert werden. Hierzu stehen Standardsoftwarelösungen zur Verfügung. Alternativ kann der optisch-maschinenlesbare Code 520 auch durch eine an der mobilen Flugvorrichtung 300 angebrachte bewegliche, oder auch starr angebrachte, Scaneinrichtung ausgelesen und softwaretechnisch geeignet dekodiert werden. Die Scaneinrichtung kann, wie bereits weiter oben beschrieben, ausgebildet sein.

Die bei der Regelung der Position der mobilen Flugvorrichtung 300 ermittelte Position innerhalb des durch das Bilderfassungssystem des Bodenfahrzeugs 400 erfassten Kamerabildes kann in eine relative Position der mobilen Flugvorrichtung 300 im Bezugssystem des Bodenfahrzeugs 400 oder Weltkoordinatensystems umgewandelt werden und an die mobile Flugvorrichtung 300 übermittelt werden, um deren Position beispielsweise immer über dem Mittelpunkt (Bezugspunkt) des Bodenfahrzeugs 400 zu halten.

In Kombination mit der Bestimmung der eigenen Position des Bodenfahrzeugs 400 kann nun die absolute Position der mobilen Flugvorrichtung 300 im Weltkoordinatensystem ermittelt und dem zuvor erfassten und ausgelesenen Code 520 zugeordnet werden. Die Lage dieses Codes 520 im Weltkoordinatensystem lässt sich daher mit sehr hoher Genauigkeit bestimmen, was für eine sichere Inventarisierung erforderlich ist. Eine genaue Bestimmung der Lage des Codes 520 bedeutet, dass dessen Lage innerhalb des Regals 510 ausreichend genau ermittelt wird, was beispielsweise durch Angabe einer Regalnummer, einer Regalbodennummer, Unterlage auf diesem Regalboden erfolgt.

Die Positionsbestimmung des Codes 520, und damit des Lagerguts 500, ergibt sich somit aus der absoluten Position des Bodenfahrzeugs 400 und der relativen Position der mobilen Flugvorrichtung 300 zum Bodenfahrzeug 400.

Nach dem erfolgten Auslesen und Dekodieren des Codes 520 und Bestimmung von dessen Position können diese Informationen an eine zentrale Rechnereinheit übermittelt werden, welche beispielsweise eine Datenbank für den Warenbestand hostet.

Wie weiterhin in Figur 11 gezeigt, weist die mobile Flugvorrichtung 300 eine erste Bilderfassungseinrichtung 311 und eine dazu optionale erste Scaneinrichtung 321 auf. Diese können, wie bereits im Zusammenhang mit den Ausführungsformen in Figuren 1 bis 7 beschrieben, aufgebaut sein und angesteuert werden. Zur Vermeidung von Wiederholungen wird auf die Beschreibung zu den Figuren 1 bis 7 verwiesen. Zusätzlich kann die mobile Flugvorrichtung 300 über eine zweite Bilderfassungseinrichtung 311 sowie eine dazu optionale zweite Scaneinrichtung 321 auf einer gegenüberliegenden Seite verfügen. Diese können baugleich zur ersten Bilderfassungseinrichtung 311 und der ersten Scaneinrichtung 321 sein. Sofern vorhanden, erfolgt das eigentliche Scannen der optisch-maschinenlesbaren Codes 520 durch die Scaneinrichtungen 321, da diese gezielt auf den zuvor erkannten optisch-maschinenlesbaren Code 520 ausgerichtet werden können. Dies ist bereits weiter oben im Zusammenhang mit den in den Figuren 1 bis 7 beschriebenen Ausführungsformen erläutert, auf die hier zur Vermeidung von Wiederholungen verwiesen wird. Lediglich erfolgt hier die Steuerung der Scaneinrichtung(en) durch das Bodenfahrzeug 400.

Die erste Scaneinrichtung 321 ist typischerweise in Flugrichtung angeordnet. Es ist jedoch auch möglich, dass die Scaneinrichtung seitlich angeordnet sind. In Figur 11 sind die erste Scaneinrichtung 321 auf einer Seite und die zweite Scaneinrichtung 321 auf einer anderen Seite der mobilen Flugvorrichtung 300 angeordnet. Bewegt sich die mobile Flugvorrichtung 300 in Richtung, welcher der vertikalen Blattrichtung der Figur 11 entspricht, entlang der Lagereinrichtung, dann weisen die erste und zweite Scaneinrichtung 321 zu den Seiten, welche den Lagereinrichtungen zugewandt sind.

Die ersten und die optionale zweite Scaneinrichtung 321 können weiterhin jeweils einen TOF-Sensor 322 aufweisen. Dieser kann zusammen mit der jeweiligen Scaneinrichtung 321 beispielsweise kardanisch gelagert und zusammen mit der Scaneinrichtung 321 bewegt werden. Es ist jedoch auch möglich, dass der TOF-Sensor 322 starr an der mobilen Flugvorrichtung befestigt ist.

Mittels des TOF-Sensors 322 wird beispielsweise der Abstand zum Lagergut 500 erfasst. Die dabei gewonnene Information kann sowohl zur Verbesserung der Positionsbestimmung und Positionssteuerung der mobilen Flugvorrichtung 300 als auch für das Erkennen eines leeren Stellplatzes verwendet werden. Zur Verbesserung der Redundanz kann auch die vom TOF-Sensor erfasste Information und die von der entsprechenden Bilderfassungseinrichtung 311 erfasste Information zusammen ausgewertet werden, um die Erkennungssicherheit von leeren Stellplätzen zu erhöhen.

Eine Kontrolleinrichtung 370 kann mit der oder den Bilderfassungseinrichtungen 311 und der oder den Scaneinrichtungen 321 verbunden sein und diese steuern. Typischerweise streamt die Kontrolleinrichtung 370 jedoch lediglich die von der/den Bilderfassungseinrichtung(en) 311 erfassten Bilder an das Bodenfahrzeug 400. Die Steuerbefehle für die Scaneinrichtung(en) 321 erhält die Kontrolleinrichtung 370 vom Bodenfahrzeug 400. Darüber hinaus kann die Kontrolleinrichtung 370 zur Flugsteuerung genutzt werden. Die Kontrolleinrichtung 370 ist mit einer ersten Sende- und Empfangsvorrichtung 371 gekoppelt, damit die Kontrolleinrichtung 370 über die erste Sendeund Empfangsvorrichtung 371 und einer damit gekoppelten drahtlosen Schnittstelle (Antenne) 360 Daten und Signale zum Bodenfahrzeug 400 übermitteln oder von dort empfangen kann.

Weiterhin verfügt die mobile Flugvorrichtung über einen austauschbaren Akkumulator 340 für die Stromversorgung der mobilen Flugvorrichtung 300.

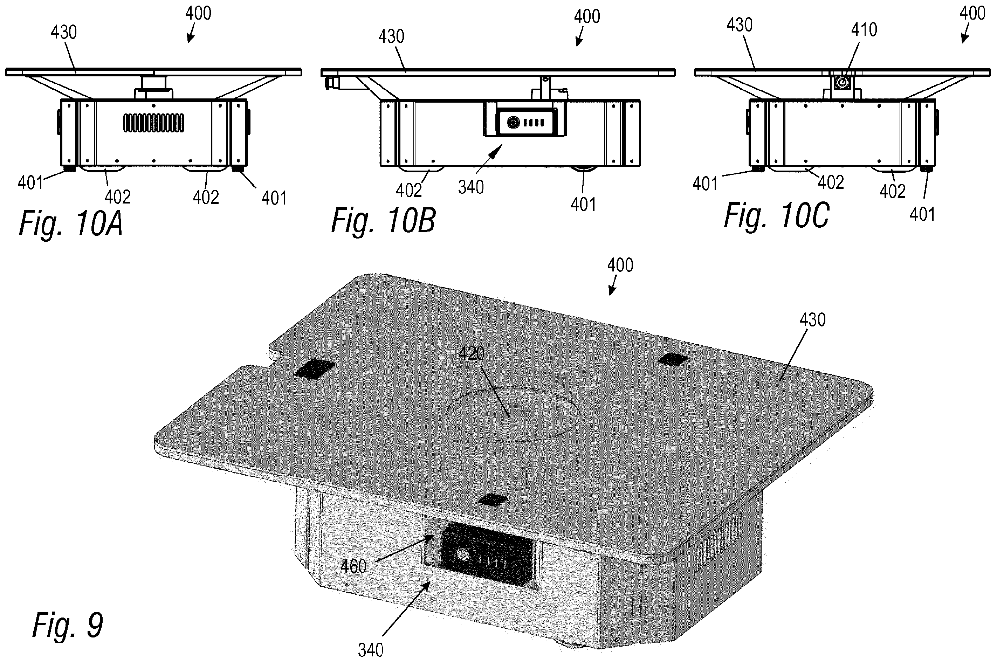

Mit Bezug auf die Figuren 9 und 10A bis 10C werden weitere Einzelheiten des Bodenfahrzeugs 400 erläutert.

Das Bodenfahrzeug 400 besitzt eine Start- und Landeplattform 430, welche gleichzeitig den oberen horizontalen Abschluss des Bodenfahrzeugs 400 bilden kann. Mittig in der Start-und Landeplattform 430 kann eine Öffnung vorgesehen sein, durch welche die hier lediglich schematisch angedeutete vertikal angeordnete Kamera des Bilderfassungssystems 420 den Bereich oberhalb des Bodenfahrzeugs 400 beobachten kann. Die optische Achse der Kamera des Bilderfassungssystems 420 definiert typischerweise die Z-Richtung des Bezugssystems des Bodenfahrzeugs 400.

Die Start- und Landeplattform 430 dient dazu, dass die mobile Flugvorrichtung 300 sicher auf dem Bodenfahrzeug 400 landen kann. Dadurch kann das Bodenfahrzeug 400 die mobile Flugvorrichtung 300 an ihren Bestimmungsort bringen oder von dort wegfahren bzw. den Einsatzort der mobilen Flugvorrichtung 300 ändern.

Wird angenommen, dass sich die mobile Flugvorrichtung 300 bezüglich der X-Y Ebene immer an der SOLL-Position X=0, Y=0 befinden soll, erfolgt eine Steuerung durch das Bodenfahrzeug 400, welche das Starten, Landen sowie die Aufwärtsbewegung und Abwärtsbewegung der mobilen Flugvorrichtung 300 als weitere Steuerbefehle an diese überträgt.

Zur Bewegung des Bodenfahrzeugs 400 verfügt dieses über angetriebene Räder 401 sowie Lenkräder oder Lenkrollen 402. Diese sind in den Figuren 10A bis 10C zu erkennen. Auf einer Seite des Bodenfahrzeugs 400, dargestellt in Figur 10C, ist das Laserscannersystem 410 angebracht, mit dem das Bodenfahrzeug 400 seine Position bestimmen kann. Grundsätzlich kann das Bodenfahrzeug 400 über ein zweites Laserscannersystem auf einer zu dem Laserscannersystem 410 gegenüberliegenden Seite des Bodenfahrzeugs 400 verfügen.

Wie in den Figuren 9 und 10B erkennbar, ist seitlich am Bodenfahrzeug 400 eine Ladeschnittstelle 460 für den austauschbaren Akkumulator 340 der mobilen Flugvorrichtung 300 vorgesehen. Die Ladeschnittstelle 460 kann beispielsweise durch eine Vertiefung im Gehäuse des Bodenfahrzeugs 400 gebildet werden, an deren stirnseitig geschlossenem Ende sich eine definierte Steckverbindung zum Koppeln mit dem Akkumulator 340 befindet.

Das Bodenfahrzeug verfügt typischerweise über eine fest verbaute Batterie (Akkumulator) welche einen Betrieb des Bodenfahrzeugs über mehrere Stunden zulässt. Der Akkumulator der mobilen Flugvorrichtung kann mittels der Ladeschnittstelle 460 geladen werden, um beispielsweise eine kontinuierlichen Betrieb zu gewährleisten. Dazu können beispielsweise zwei Akkumulatoren 340 jeweils im Austausch verwendet werden.

Alternativ ist es möglich, dass die mobile Flugvorrichtung 300 und das Bodenfahrzeug 400 über ein flexibles Kabel miteinander verbunden sind über welches sowohl ein Datenaustausch als auch die Stromversorgung der mobilen Flugvorrichtung 300 durch das Bodenfahrzeug 400 gewährleistet wird. Dadurch kann auf einen Akkumulator 340 in der mobilen Flugvorrichtung 300 verzichtet werden, wodurch diese besonders leicht ist. Dieser Gewichtsgewinn kann auch dazu genutzt werden, leistungsfähige Kontrolleinrichtungen bzw. Optiken, die ein höheres Gewicht haben, in der mobilen Flugvorrichtung 300 einzubauen.

Darüber hinaus verfügt das Bodenfahrzeug 400 über eine Steuereinheit 470, in welcher sämtliche Steuer und Regelfunktionen vereint sein können, sowie eine mit der Steuereinheit 470 gekoppelte zweite Sende- und Empfangsvorrichtung 471 zur drahtlosen Kopplung mit der ersten Sende- und Empfangsvorrichtung 371.

Wird das Bodenfahrzeug 400 nicht benötigt, kann es selbstständig zu einem dafür vorgesehenen Parkplatz oder Terminal fahren und dort parken. Dort kann dann auch die Batterie des Bodenfahrzeugs 400 aufgeladen werden. In dieser Parkposition kann sich die mobile Flugvorrichtung 300 auf der Start- und Landeplattform 430 befinden.

Auch wenn sich das Bodenfahrzeug 400 autonom durch das Warenlager bewegt, kann eine externe Steuerung sowohl des Bodenfahrzeugs 400 als auch der mobilen Flugvorrichtung 300 vorgesehen sein. Dies kann beispielsweise über ein mobiles Eingabegerät (beispielsweise ein Tablet oder eine andere Einrichtung mit grafischer Bildausgabe und Eingabe von Steuerbefehlen), welches drahtlos insbesondere mit dem Bodenfahrzeug 400 gekoppelt ist, erfolgen. Über das mobile Eingabegerät kann das Bodenfahrzeug 400 und/oder die mobile Flugvorrichtung 300 durch Bedienpersonal initialisiert und insgesamt die mobile Vorrichtung aus Bodenfahrzeug 400 und mobile Flugvorrichtung 300 zur Durchführung eines Inventarisierungsprozesses gestartet werden. Nach einem Start fährt dann das Bodenfahrzeug 400 an eine vorgegebene Startposition im Warenlager und startet dort den Inventarisierungsprozess durch kontinuierliches Abscannen des Warenbestands durch die mobile Flugvorrichtung 300, wie weiter oben beschrieben. Der gesamte Prozess kann vom Bedienpersonal am mobilen Eingabegerät überwacht werden. So ist es beispielsweise möglich, dass die von der ersten Bilderfassungseinrichtung 311 der mobilen Flugvorrichtung 300 erfassten Bilder über das Bodenfahrzeug 400 an das mobile Eingabegerät übertragen werden. Das Bedienpersonal kann dadurch den Inventarisierungsprozess verfolgen. Ebenso kann die Steuerung der mobilen Flugvorrichtung 300 am mobilen Eingabegerät überwacht werden. Das Bedienpersonal kann ggf. über das mobile Eingabegerät auch die Steuerung übernehmen. Grundsätzlich arbeitet jedoch die Vorrichtung zum Inventarisieren (Bodenfahrzeug und mobile Flugvorrichtung) autonom, ohne dass es einer Steuerung durch Bedienpersonal bedarf.

Die dabei gelesenen optisch-maschinenlesbaren Codes werden mit ihrer Position gespeichert und geeignet an eine zentrale Rechnereinheit übertragen. Zusätzlich können die so ermittelten Daten an ein ERP System (Enterprise-Resource-Planning) eines Kunden übermittelt werden.

### Bezugszeichen

- 100: mobile Vorrichtung
- 101: Grundrahmen
- 102: Motorträger
- 103: Motor
- 104: Gehäuse
- 105: Rotorblatt
- 110: Modul
- 111: Bilderfassungseinrichtung
- 112: Bildverarbeitungseinrichtung / Auswerteeinrichtung
- 121: Scaneinrichtung
- 122: Bildbeleuchtung
- 123: Scankamera
- 131, 132, 133, 134, 135, 136: Ultraschallsensor
- 140: Stromversorgung
- 150: Positionsbestimmungseinrichtung
- 160: drahtlose Schnittstelle
- 170: Steuereinrichtung
- 200: Lagergut / Paket
- 210: Lagereinrichtung / Regal
- 220: optisch-maschinenlesbarer Code / optisch-maschinenlesbares Etikett
- 230: Lichtkegel der Bildbeleuchtung
- 240: Bild / Bilddaten
- 250: Aufnahmebereich der Bilderfassungseinrichtung
- 300: mobile Flugvorrichtung/Drohne
- 302: Motorträger / Arm
- 303: Motor/Rotor
- 304: Gehäuse
- 311: Bilderfassungseinrichtung
- 321: Scaneinrichtung
- 322: TOF-Sensor
- 340: Stromversorgung / Akkumulator
- 360: drahtlose Schnittstelle / Antenne
- 361, 362, 363, 364: optischen Signaleinrichtung / LED
- 370: Kontrolleinrichtung
- 371: erste Sende- und Empfangsvorrichtung
- 400: bodengestütztes Fahrzeug
- 401: angetriebene Räder
- 402: Lenkräder / Lenkrollen
- 410: Umgebungssensorsystem /Laserscannersystem / LIDAR
- 420: Bilderfassungssystem / vertikale Kamera
- 430: Start- und Landeplattform
- 460: Ladeschnittstelle
- 470: Steuereinheit
- 471: zweite Sende- und Empfangsvorrichtung
- 480: vorgegebener Bereich
- 490: drahtlose Schnittstelle / Antenne
- 500: Lagergut / Paket
- 510: Lagereinrichtung / Regal
- 520: optisch-maschinenlesbarer Code / optisch-maschinenlesbares Etikett

## Patentansprüche

1. Vorrichtung zum Inventarisieren von Lagerbeständen, aufweisend:
- eine mobile Flugvorrichtung (300) mit einer ersten Sende- und Empfangsvorrichtung, und
- einer ersten Bilderfassungseinrichtung (311) zur bildlichen Erfassung von Lagergut (500) und/oder von Lagereinrichtungen (510); und
- ein Bodenfahrzeug (400) mit
- einer Steuereinheit (470),
- einem mit der Steuereinheit (470) gekoppelten Umgebungssensorsystem (410) zur Erfassung der Umgebung, und
- einer mit der Steuereinheit (470) gekoppelten zweiten Sende- und Empfangsvorrichtung (471) zur Kommunikation mit der ersten Sende- und Empfangsvorrichtung (371) der mobilen Flugvorrichtung (300),
**dadurch gekennzeichnet, dass**
- die mobile Flugvorrichtung eine optische Signaleinrichtung zur Abgabe von Positionssignalen aufweist, und
- das Bodenfahrzeug (400) ein mit der Steuereinheit (470) gekoppeltes Bilderfassungssystem (420) zur Erfassung der Positionssignale der mobilen Flugvorrichtung (300) aufweist.

2. Vorrichtung nach Anspruch 1, wobei das Umgebungssensorsystem (410) ein Laserscannersystem aufweist.

3. Vorrichtung nach Anspruch 1 oder 2, wobei das Bilderfassungssystem (420) des Bodenfahrzeugs (400) mindestens eine vertikal nach oben gerichtete Kamera (420) zur bildlichen Erfassung der mobile Flugvorrichtung (300) und ihrer Positionssignale aufweist.

4. Vorrichtung nach einem der Ansprüche 1 bis 3, wobei die optische Signaleinrichtung (361, 362, 363, 364) der mobilen Flugvorrichtung (300) eine Vielzahl von nach unten abstrahlenden optischen Signalquellen (361, 362, 363, 364) aufweist, die in einem vorgegebenen Muster verteilt an der mobilen Flugvorrichtung (300) angeordnet sind, wobei zumindest zwei der Signalquellen (361, 362, 363, 364) Strahlung mit unterschiedlicher Wellenlänger emittieren.

5. Vorrichtung nach einem der Ansprüche 1 bis 4, wobei die Steuereinheit des Bodenfahrzeugs (400) eingerichtet ist, Bilddaten von dem Bilderfassungssystem (420) zu empfangen und zu verarbeiten und basierend auf den Bilddaten Steuerbefehle zu erzeugen und diese über die zweite Sende- und Empfangsvorrichtung (471) an die erste Sende- und Empfangsvorrichtung (371) der mobilen Flugvorrichtung (300) zur Steuerung der mobilen Flugvorrichtung (300) zu übertragen.

6. Vorrichtung nach einem der Ansprüche 1 bis 5, wobei das Bodenfahrzeug (400) weiterhin eine Start- und Landeplattform (430) aufweist, auf welcher die mobile Flugvorrichtung (300) landen kann.

7. Vorrichtung nach einem der Ansprüche 1 bis 6, wobei das Bodenfahrzeug (400) weiterhin eine Ladeschnittstelle (460) zum Laden eines Akkumulators (340) der mobilen Flugvorrichtung (300) aufweist.

8. Vorrichtung nach einem der Ansprüche 1 bis 7, wobei die mobile Flugvorrichtung (300) weiterhin eine relativ zur ersten Bilderfassungseinrichtung (311) bewegbare erste Scaneinrichtung (321) zum Auslesen von optisch-maschinenlesbaren Code aufweist.

9. Vorrichtung nach Anspruch 8, wobei die mobile Flugvorrichtung (300) weiterhin eine zweite Bilderfassungseinrichtung (311) und eine relativ zur zweiten Bilderfassungseinrichtung (311) bewegbare zweite Scaneinrichtung (321) zum Auslesen von optisch-maschinenlesbaren Code aufweist.

10. Vorrichtung nach einem der Ansprüche 1 bis 9, wobei die mobile Flugvorrichtung eine drahtlos mit dem Bodenfahrzeug (400) verbundene Drohne oder eine über ein flexibles Kabel mit dem Bodenfahrzeug (400) verbundene Drohne ist.

11. Verfahren zum Inventarisieren von Lagerbeständen, aufweisend:
- Bewegen eines Bodenfahrzeugs (400) nach einem der Ansprüche 1 bis 10 und einer durch das Bodenfahrzeug (400) gesteuerten mobilen Flugvorrichtung (300) nach einem der Ansprüche 1 bis 10 durch ein Lager mit Lagereinrichtungen (510), in denen Lagergut (500) gelagert ist, wobei die Bewegung der mobile Flugvorrichtung (300) durch das Bodenfahrzeug (400) derart gesteuert wird, dass die mobile Flugvorrichtung (300) oberhalb des Bodenfahrzeugs (400) und innerhalb eines durch das Bodenfahrzeug (400) vorgegebenen Bereichs (480) bleibt;
- Erfassen eines Bildes von Lagergut (500) und/oder Lagereinrichtungen (510) durch eine erste Bilderfassungseinrichtung (311) der mobilen Flugvorrichtung (300);
- Verarbeiten des Bildes zur Erkennung, ob ein optisch-maschinenlesbarer Code (520) am Lagergut (500) und/oder an der Lagereinrichtung (510) angebracht ist;
- Auslesen des optisch-maschinenlesbaren Codes (520);
- Zuordnen von positions-bezogenen Daten zum ausgelesenen optisch-maschinenlesbaren Code, wobei die positions-bezogenen Daten aus der Position des Bodenfahrzeugs (400) und/oder der mobilen Flugvorrichtung (300) abgeleitet werden; und
- optionales Übertragen des ausgelesenen optisch-maschinenlesbaren Codes und der zugeordneten positions-bezogenen Daten an eine zentrale Rechnereinheit.

12. Verfahren nach Anspruch 11, wobei sich das Bodenfahrzeug (400) autonom entlang der Lagereinrichtungen (510) bewegt und zum Erfassen des Lagerguts (500) durch die mobile Flugvorrichtung (300) diese in ihrer Flughöhe steuert, sodass die erste Bilderfassungseinrichtung (311) der mobilen Flugvorrichtung (300) etwa auf der Höhe des Lagerguts (500) ist und durch die die erste Bilderfassungseinrichtung (311) erfasst werden kann.

13. Verfahren nach Anspruch 11 oder 12, wobei sich das Bodenfahrzeug (400) autonom durch das Lager bewegt und mittels eines Umgebungssensorsystems (410) seine Umgebung erfasst, durch eine Steuereinheit (470) auswertet und mittels eines Verfahrens zur simultanen Positionsbestimmung und Kartenerstellung (SLAM) im Lager orientiert.

14. Verfahren nach einem der Ansprüche 11 bis 13, wobei zum Steuern der mobilen Flugvorrichtung (300) zyklisch
- die mobile Flugvorrichtung durch ein Bilderfassungssystem (420) des Bodenfahrzeugs (400) erfasst und die Position der mobilen Flugvorrichtung (300) relativ zum Bodenfahrzeug (400) durch Erkennen der optischen Signaleinrichtung (361, 362, 363, 364) der mobilen Flugvorrichtung (300) bestimmt wird; und
- Steuerbefehle auf Basis der bestimmten Position der mobilen Flugvorrichtung (300) durch eine Steuereinheit (470) des Bodenfahrzeugs (400) erzeugt und an die mobile Flugvorrichtung (300) übermittelt werden, um die Position der mobilen Flugvorrichtung (300) oberhalb eines Referenzpunktes des Bodenfahrzeugs (400) zu halten, auch wenn sich das Bodenfahrzeug bewegt.

15. Verfahren nach einem der Ansprüche 11 bis 14, wobei das Auslesen des optisch-maschinenlesbaren Codes (520)
- durch Auswerten des durch die erste Bilderfassungseinrichtung (311) der mobilen Flugvorrichtung (300) erfassten Bildes; oder
- durch Lokalisieren des optisch-maschinenlesbarer Codes (520) innerhalb des erfassten Bildes und Ausrichten einer bewegbaren ersten Scaneinrichtung (321) auf den lokalisierten optisch-maschinenlesbaren Code (520) und Auslesen durch die erste Scaneinrichtung (321) erfolgt.

## Claims

1. An apparatus for inventorying of storage items, comprising:
- a mobile flying device (300) with
- a first transmitting and receiving device, and
- a first image acquisition device (311) for visual acquisition of storage goods (500) and/or storage facilities (510); and
- a ground vehicle (400) with
- a control unit (470),
- an environment sensor system (410) coupled to the control unit (470) for detecting the environment, and
- a second transmitting and receiving device (471) coupled to the control unit (470) for communicating with the first transmitting and receiving device (371) of the mobile flying device (300),
**characterised in that**
- the mobile flying device (300) has an optical signalling device for emitting position signals, and
- the ground vehicle (400) has an image acquisition system (420) coupled to the control unit (470) for detecting the position signals of the mobile flying device (300).

2. An apparatus according to claim 1, wherein the environment sensor system (410) comprises a laser scanner system.

3. An apparatus according to claim 1 or 2, wherein the image acquisition system (420) of the ground vehicle (400) has at least one vertically upward-facing camera (420) for visual acquisition of the mobile flying device (300) and its position signals.

4. An apparatus according to any one of claims 1 to 3, wherein the optical signalling device (361, 362, 363, 364) of the mobile flying device (300) comprises a plurality of downwardly radiating optical signal sources (361, 362, 363, 364) distributed in a predetermined pattern on the mobile flying device (300), wherein at least two of the signal sources (361, 362, 363, 364) emit radiation of different wavelengths.

5. An apparatus according to one of claims 1 to 4, wherein the control unit of the ground vehicle (400) is adapted to receive and process image data from the image acquisition system (420) and to generate control commands based on the image data and to transmit the control commands to the first transmitting and receiving device (371) of the mobile flying device (300) via the second transmitting and receiving device (471) for controlling the mobile flying device (300).

6. An apparatus according to any one of claims 1 to 5, wherein the ground vehicle (400) further comprises a take-off and landing platform (430) on which the mobile flying device (300) can land.

7. An apparatus according to one of claims 1 to 6, wherein the ground vehicle (400) further comprises a charging interface (460) for charging an accumulator (340) of the mobile flying device (300).

8. An apparatus according to any one of claims 1 to 7, wherein the mobile flying device (300) further comprises a first scanning device (321) movable relative to the first image acquisition device (311) for reading an optical machine-readable code.

9. An apparatus according to claim 8, wherein the mobile flying device (300) further comprises a second image acquisition device (311) and a second scanning device (321) movable relative to the second image acquisition device (311) for reading optical machine-readable code.

10. An apparatus according to any one of claims 1 to 9, wherein the mobile flying device is a drone wirelessly connected to the ground vehicle (400) or a drone connected to the ground vehicle (400) via a flexible cable.

11. A method for inventorying of storage items, comprising:
- moving a ground vehicle (400) according to any one of claims 1 to 10 and a mobile flying device (300) controlled by the ground vehicle (400) according to any one of claims 1 to 10 through a warehouse having storage facilities (510) in which storage goods (500) is stored, wherein the movement of the mobile flying device (300) is controlled by the ground vehicle (400) in such a way that the mobile flying device (300) remains above the ground vehicle (400) and within an area (480) predetermined by the ground vehicle (400);
- capturing an image of storage goods (500) and/or storage facilities (510) by a first image acquisition device (311) of the mobile flying device (300);
- processing the image to detect whether an optical machine-readable code (520) is attached to the storage goods (500) and/or the storage facility (510);
- reading the optical machine-readable code (520);
- assigning position-related data to the read-out optical machine-readable code, wherein the position-related data are derived from the position of the ground vehicle (400) and/or the mobile flying device (300); and
- optionally transmitting the read-out optical machine-readable code and the assigned position-related data to a central computer unit.

12. A method according to claim 11, wherein the ground vehicle (400) moves autonomously along the storage facilities (510) and, in order to capture the storage goods (500) by the mobile flying device (300), controls the flying height of the mobile flying device (300) so that the first image acquisition device (311) of the mobile flying device (300) is approximately at the height of the storage goods (500) and can be detected by the first image acquisition device (311).

13. A method according to claim 11 or 12, wherein the ground vehicle (400) moves autonomously through the warehouse and detects its environment by means of a environment sensor system (410), evaluates it by means of a control unit (470) and orients itself in the warehouse by means of a method for simultaneous localisation and mapping (SLAM).

14. A method according to any one of claims 11 to 13, wherein, to control the mobile flying device (300), cyclically
- the mobile flying device is detected by an image acquisition system (420) of the ground vehicle (400) and the position of the mobile flying device (300) relative to the ground vehicle (400) is determined by recognising the optical signalling device (361, 362, 363, 364) of the mobile flying device (300); and
- control commands are generated by a control unit (470) of the ground vehicle (400) on the basis of the determined position of the mobile flying device (300) and transmitted to the mobile flying device (300) in order to maintain the position of the mobile flying device (300) above a reference point of the ground vehicle (400), even when the ground vehicle is moving.

15. A method according to any one of claims 11 to 14, wherein reading the optical machine-readable code (520) is performed
- by evaluating the image captured by the first image acquisition device (311) of the mobile flying device (300); or
- by localising the optical machine-readable code (520) within the captured image and aligning a movable first scanning device (321) with the localised optical machine-readable code (520) and reading by the first scanning device (321).

## Revendications

1. Dispositif pour inventorier des stocks, présentant :
- un dispositif volant mobile (300) avec un premier dispositif d'envoi et de réception, et
- un premier système d'acquisition d'images (311) destiné à acquérir des images de marchandises stockées (500) et/ou de systèmes de stockage (510) ; et
- un véhicule terrestre (400) avec
-- une unité de commande (470),
-- un système de capteur d'environnement (410) couplé à l'unité de commande (470), destiné à détecter l'environnement, et
-- un deuxième dispositif d'envoi et de réception (471) couplé à l'unité de commande (470), pour la communication avec le premier dispositif d'envoi et de réception (371) du dispositif volant mobile (300),
**caractérisé en ce que**
- le dispositif volant mobile présente un système de signalisation optique destiné à émettre des signaux de position, et
- le véhicule terrestre (400) présente un système d'acquisition d'images (420) couplé à l'unité de commande (470), destiné à détecter les signaux de position du dispositif volant mobile (300).

2. Dispositif selon la revendication 1, dans lequel le système de capteur d'environnement (410) présente un système de balayage laser.

3. Dispositif selon la revendication 1 ou 2, dans lequel le système d'acquisition d'images (420) du véhicule terrestre (400) présente au moins une caméra (420) dirigée verticalement vers le haut destiné à acquérir des images du dispositif volant mobile (300) et à détecter ses signaux de position.

4. Dispositif selon l'une quelconque des revendications 1 à 3, dans lequel le système de signalisation optique (361, 362, 363, 364) du dispositif volant mobile (300) présente une pluralité de sources de signaux (361, 362, 363, 364) optiques émettant un rayonnement vers le bas, qui sont disposées selon un schéma prédéfini avec une répartition sur le dispositif volant mobile (300), dans lequel au moins deux des sources de signaux (361, 362, 363, 364) émettent un rayonnement avec différentes longueurs d'onde.

5. Dispositif selon l'une quelconque des revendications 1 à 4, dans lequel l'unité de commande du véhicule terrestre (400) est mise au point pour recevoir des données d'image provenant du système d'acquisition d'images (420) et pour générer, sur la base des données d'images, des instructions de commande et transmettre celles-ci par l'intermédiaire du deuxième dispositif d'envoi et de réception (471) au premier dispositif d'envoi et de réception (371) du dispositif volant mobile (300) pour commander le dispositif volant mobile (300).

6. Dispositif selon l'une quelconque des revendications 1 à 5, dans lequel le véhicule terrestre (400) présente par ailleurs une plateforme de décollage et d'atterrissage (430), sur laquelle le dispositif volant mobile (300) peut atterrir.

7. Dispositif selon l'une quelconque des revendications 1 à 6, dans lequel le véhicule terrestre (400) présente par ailleurs une interface de charge (460) destinée à charger un accumulateur (340) du dispositif volant mobile (300).

8. Dispositif selon l'une quelconque des revendications 1 à 7, dans lequel le dispositif volant mobile (300) présente par ailleurs un premier système de balayage (321) pouvant être déplacé par rapport au premier système d'acquisition d'images (311), destiné à lire un code optique lisible par machine.

9. Dispositif selon la revendication 8, dans lequel le dispositif volant mobile (300) présente par ailleurs un deuxième système d'acquisition d'images (311) et un deuxième système de balayage (321) pouvant être déplacé par rapport au deuxième système d'acquisition d'images (311), pour lire un code optique lisible par machine.

10. Dispositif selon l'une quelconque des revendications 1 à 9, dans lequel le dispositif volant mobile est un drone raccordé sans fil au véhicule terrestre (400) ou un drone raccordé au véhicule terrestre (400) par l'intermédiaire d'un câble flexible.

11. Procédé pour inventorier des stocks, présentant :
- le déplacement d'un véhicule terrestre (400) selon l'une quelconque des revendications 1 à 10 et d'un dispositif volant mobile (300) selon l'une quelconque des revendications 1 à 10 commandé par le véhicule terrestre (400) à travers un entrepôt avec des systèmes de stockage (510), dans lesquels des marchandises à stocker (500) sont stockées, dans lequel le déplacement du dispositif volant mobile (300) est commandé de telle manière par le véhicule terrestre (400) que le dispositif volant mobile (300) reste au-dessus du véhicule terrestre (400) et à l'intérieur d'une zone (480) prédéfinie par le véhicule terrestre (400) ;
- l'acquisition d'une image de marchandises stockées (500) et/ou de systèmes de stockage (510) par un premier système d'acquisition d'images (311) du dispositif volant mobile (300) ;
- le traitement de l'image pour identifier si un code optique lisible par machine (520) est appliqué sur les marchandises stockées (500) et/ou sur le système de stockage (510) ;
- la lecture du code optique lisible par machine (520) ;
- l'association de données liées à la position au code optique lisible par machine, dans lequel les données liées à la position sont déduites de la position du véhicule terrestre (400) et/ou du dispositif volant mobile (300) ; et
- la transmission en option du code optique lisible par machine et des données liées à la position associées à une unité de calcul centrale.

12. Procédé selon la revendication 11, dans lequel le véhicule terrestre (400) se déplace de manière autonome le long des systèmes de stockage (510) et commande l'altitude de vol du dispositif volant mobile (300) pour détecter les marchandises stockées (500) par celui-ci si bien que le premier système d'acquisition d'images (311) du dispositif volant mobile (300) se situe à peu près à la hauteur des marchandises stockées (500) et qu'une image de celles-ci peut être détectée par le premier système d'acquisition d'images (311).

13. Procédé selon la revendication 11 ou 12, dans lequel le véhicule terrestre (400) se déplace de manière autonome à travers l'entrepôt et détecte sont environnement au moyen d'un système de capteur d'environnement (410), l'évalue par une unité de commande (470) et s'oriente dans l'entrepôt au moyen d'un procédé SLAM [simultaneous Localization and Mapping - de localisation et de cartographie simultanées].

14. Procédé selon l'une quelconque des revendications 11 à 13, dans lequel pour commander le dispositif volant mobile (300) de manière cyclique
- le dispositif volant mobile est détecté par un système d'acquisition d'images (420) du véhicule terrestre (400) et la position du dispositif volant mobile (300) par rapport au véhicule terrestre (400) est déterminée en identifiant le système de signalisation optique (361, 362, 363, 364) du dispositif volant mobile (300) ; et
- des instructions de commande sont générées sur la base de la position déterminée du dispositif volant mobile (300) par une unité de commande (470) du véhicule terrestre (400) et sont transmises au dispositif volant mobile (300) pour maintenir la position du dispositif volant mobile (300) au-dessus d'un point de référence du véhicule terrestre (400) même lorsque le véhicule terrestre se déplace.

15. Procédé selon l'une quelconque des revendications 11 à 14, dans lequel la lecture du code optique lisible par machine (520) est effectuée
- en évaluant l'image acquise par le premier système d'acquisition d'images (311) du dispositif volant mobile (300) ; ou
- en localisant le code optique lisible par machine (520) à l'intérieur de l'image acquise et en orientant un premier système de balayage (321) pouvant être déplacé sur le code optique lisible par machine (520) localisé et en le faisant lire par le premier système de balayage (321).
